# EUROPÄISCHE PATENTSCHRIFT

(11) **EP 2 782 854 B1**
(45) Veröffentlichungstag und Bekanntmachung des Hinweises auf die Patenterteilung: **17.06.2015**
(21) Anmeldenummer: 12797761.9
(22) Anmeldetag: 14.11.2012
(51) Int. Cl.: B65G 47/61

(54) **ABGABESTATION FÜR EINE FÖRDERANLAGE UND VERFAHREN ZUM AUSSCHLEUSEN VON FÖRDERGÜTERN AUS EINER FÖRDERANLAGE**
DISCHARGING STATION FOR A CONVEYING INSTALLATION, AND METHOD FOR DELIVERING ARTICLES FROM A CONVEYING INSTALLATION
POSTE DE DISTRIBUTION D'UNE INSTALLATION DE TRANSPORT ET PROCÉDÉ PERMETTANT DE RETIRER DES MARCHANDISES TRANSPORTÉES D'UNE INSTALLATION DE TRANSPORT

(30) Priorität: 25.11.2011 DE 102011119807
(43) Veröffentlichungstag der Anmeldung: 01.10.2014
(73) Patentinhaber: SSI Schäfer Peem GmbH, 8051 Graz (AT)
(72) Erfinder: WINKLER, Max, 8010 Graz (AT)
(74) Vertreter: Witte, Weller & Partner Patentanwälte mbB
(86) Internationale Anmeldenummer: PCT/EP2012/072613
(87) Internationale Veröffentlichungsnummer: WO 2013/075992

(56) Entgegenhaltungen:
- EP-A2- 0 517 677
- WO-A1-93/24398
- GB-A- 2 079 708

## Beschreibung

Die Erfindung betrifft eine Abgabestation für eine Förderanlage, insbesondere eine Hängeförderanlage, mit einem Aktuator, der mit einem Eingriffskörper mit einem Eingriffsabschnitt zusammenwirkt, um ein passierendes Fördergut selektiv aus einem Förderpfad der Förderanlage auszuschleusen und einer Abgabestrecke zuzuführen.

Die Erfindung betrifft ferner ein Verfahren zum Ausschleusen von Fördergütern aus einem Förderpfad einer Förderanlage, insbesondere einer Hängeförderanlage.

Aus der deutschen Offenlegungsschrift DE 195 36 313 A1 sind ein Verfahren und eine Vorrichtung zum Fördern von auf Bügeln hängendem Fördergut bekannt. Die bekannte Vorrichtung weist eine Ausschleusstelle auf, bei der eine Weiche vorgesehen ist, die ein ansteigendes Teilstück und ein abfallendes Teilstück aufweist. Die Fördergüter sind mittels Bügelhaken an Förderelementen aufgenommen. Beim Passieren der Weiche werden die Bügelhaken vom ersten Teilstück angehoben und anschließend selektiv von einem in vertikaler Richtung klappbaren Bügel übernommen oder vom zweiten Teilstück wieder auf die Förderelemente abgesenkt, um weiterbewegt zu werden.

Auf diese Weise können Fördergüter grundsätzlich selektiv ausgeschleust werden. Es hat sich jedoch gezeigt, dass die bekannte Ausschleusstelle in aufwändiger Weise präzise gefertigt und justiert werden muss, um einen Regelbetrieb zu ermöglichen.

Gemäß einer weiteren Ausgestaltung der aus der DE 195 36 313 A1 bekannten Vorrichtung, ist das zweite Teilstück der Weiche gegenüber dem ersten Teilstück verschwenkbar. Auf diese Weise kann, abhängig von der Lage des zweiten Teilstücks das Fördergut beim Passieren der Weiche zunächst angehoben und danach entweder ausgeschleust oder wieder auf den Förderelementen abgesetzt werden.

Es hat sich gezeigt, dass sich ein zum Verschwenken des zweiten Teilstücks erforderlicher Antrieb nur mit großem Aufwand realisieren lässt, da im Bereich der Weiche regelmäßig deutliche Bauraumrestriktionen vorherrschen. Bedingt durch die Form der Bügelhaken und die Nähe der Schwenkachse zu den Förderelementen ergeben sich hohe Hürden für eine praktische Umsetzung.

Aus der JP 08-208 028 A ist eine Hängeförderanlage für Kleiderbügel bekannt, die eine Abgabeeinrichtung aufweist, die mit einer verschwenkbaren Abführstange versehen ist, um Kleiderbügel ausschleusen zu können. Aus der WO 1993/024398 A1 und der DE 93 03 645 U1 sind weitere Förderanlagen mit Vorrichtungen zum Ausschleusen von Fördergütern bekannt. Der Oberbegriff des Anspruchs 1 entspricht dem Stand der Technik nach der WO 1993/024398 A1.

Der Erfindung liegt die Aufgabe zugrunde, eine Abgabestation und eine Förderanlage mit einer Abgabestation anzugeben, die bei einfachem und robustem Aufbau sichere Ausschleusvorgänge gewährleisten kann und weiterhin möglichst fehlerverzeihend ausgebildet ist, um Ausfallzeiten sowie Aufwendungen für Wartungen und Reparaturen minimieren zu können. Ferner soll ein Verfahren zum Ausschleusen von Fördergütern angegeben werden, zu dessen Durchführung sich die Vorrichtung möglichst eignen soll.

Dieser Aufgabe wird durch eine Abgabestation für eine Förderanlage, insbesondere eine Hängeförderanlage mit Förderträgern, die entlang eines Förderpfades in einer Förderrichtung verfahrbar sind, zur Aufnahme von Fördergütern, insbesondere von Befestigungselementen, vorzugsweise Haken, der Fördergüter gelöst, wobei die Abgabestation einen Aktuator aufweist, der mit einem Eingriffskörper mit einem Eingriffsabschnitt zusammenwirkt, wobei der Eingriffsabschnitt an einen Auflagekörper des Förderträgers angepasst ist, wobei der Eingriffskörper selektiv zwischen einer Eingriffskonfiguration und einer Ausrückkonfiguration verlagerbar ist, wobei der Eingriffsabschnitt in der Eingriffskonfiguration an den entlang des Förderpfades verfahrbaren Auflagekörper angenähert ist, um ein passierendes Fördergut, das am Auflagekörper aufgenommen ist, selektiv aus dem Förderpfad auszuschleusen, wobei sich der Eingriffsabschnitt vorzugsweise seitlich zumindest partiell an den Auflagekörper anschmiegt, wobei der Eingriffsabschnitt in der Ausrückkonfiguration vom Auflagekörper beabstandet ist, wobei der Eingriffskörper eine Führungskontur aufweist, um das auszuschleusende Fördergut einer Abgabestrecke zuzuführen, und wobei der Eingriffsabschnitt im Wesentlichen seitlich, vorzugsweise ungefähr in einer Querrichtung zur Förderrichtung, auf den Auflagekörper zuführbar ist.

Die Aufgabe der Erfindung wird auf diese Weise vollkommen gelöst.

Erfindungsgemäß wird nämlich nunmehr eine seitliche Zustellbewegung ermöglicht, die gemeinsam mit der genannten Gestaltung des Eingriffsabschnitts eine hohe Fehlertoleranz der Abgabestation erlauben kann. Im Stand der Technik bekannte Abgabestationen erfordern regelmäßig eine vertikale Zuführung (von oben), um etwa einen Kleiderbügel vom Auflagekörper zu übernehmen. Ein solcher Eingriffskörper wäre hochgradig anfällig gegenüber seitlichem Verschwenken, etwa leichten Verbiegungen infolge einer fehlerhaften Montage oder eines fehlerhaften Gebrauchs. Die Auflagekörper der Förderanlage sind insbesondere bei Hängeförderanlagen regelmäßig vertikal geführt. Die Auflagekörper können etwa Teil von sog. Leitersegmenten sein, die einer Förderkette zugehörig sind, die entlang einer Führungsschiene verfahrbar ist. Die "Sprossen" der Leitern sind etwa als sog. Befestigungsstege ausgeführt und können die Auflagekörper bspw. mit einem Förderträger verbinden. Eine Fehllage bzw. Fehlorientierung eines vertikal zuführbaren Eingriffskörpers kann etwa dazu führen, dass der Eingriffskörper in der Eingriffskonfiguration derart in den Förderpfad hineinragt, dass die Befestigungselemente eines passierenden Förderträgers mit den "Sprossen" der Leitern kollidieren. Eine solche Kollision hat regelmäßig einen Anlagenstillstand sowie Beschädigungen der Förderanlage und der Fördergüter zur Folge.

Der seitlich auf die Auflagekörper zuführbare Eingriffskörper kann spürbar fehlertoleranter ausgebildet sein. Insbesondere dann, wenn der Eingriffsabschnitt ein Innenprofil aufweist, das den Auflagekörper seitlich zumindest teilweise umschließt, kann vermieden werden, dass der Eingriffskörper in der Eingriffskonfiguration derart in den Förderpfad hineinragt, dass etwa Kollisionen mit den Befestigungsstegen eines Leiterförderers zu befürchten sind.

Im Sinne dieser Anmeldung kann unter dem "seitlichen Zuführen" eine lineare Bewegung und/oder eine Schwenkbewegung verstanden werden. Grundsätzlich kann das seitliche Zuführen Bewegungskomponenten umfassen, die in einer Querrichtung (Z-Richtung) in Richtung auf den Förderpfad orientiert sind. Der Förderpfad definiert regelmäßig eine Längsrichtung (X-Richtung), die zur Querrichtung (Z-Richtung) senkrecht orientiert ist. Eine vertikale Richtung (Y-Richtung oder Höhe) ist zur Querrichtung und zur Längsrichtung jeweils senkrecht orientiert. Jedoch sollte unter dem seitlichen Zuführen keinesfalls einschränkend lediglich eine Bewegung verstanden werden, die ausschließlich entlang der Z-Richtung auf den Auflagekörper gerichtet ist. Es versteht sich, dass auch mäßig davon abweichende Zuführbewegungen als seitliches Zuführen aufgefasst werden können. Hierzu können insbesondere (Momentan-)Bewegungen gehören, die etwa in einem gedachten Kegel verlaufen, der um die Z-Achse ausgebildet ist und dessen Spitze in Richtung auf den Auflagekörper zeigt. Der gedachte Kegel kann etwa einen Kegelwinkel (entsprechend einem doppelten "Einstellwinkel") von ungefähr 30°, vorzugsweise ungefähr 20°, weiter bevorzugt ungefähr 10° aufweisen. Auch bei derartigen Zuführbewegungen kann der Eingriffskörper im Wesentlichen seitlich auf den Auflagekörper zugeführt werden und die Abgabestation kann fehlertolerant ausgebildet sein.

Es versteht sich, dass das Anschmiegen des Eingriffsabschnitts an den Auflagekörper dergestalt erfolgen kann, dass ein geringer Freiraum zwischen dem Eingriffsabschnitt und dem Auflagekörper, insbesondere zwischen einem Außenprofil und einem Innenprofil, verbleibt, um eine Relativbewegung zu erlauben. Es versteht sich jedoch ebenso, dass das Anschmiegen auch zumindest zeitweilige Berührungen zwischen dem Eingriffsabschnitt und dem Auflagekörper erlauben kann, die jedoch der Funktionalität der Abgabestation nicht entgegenstehen.

Die genannte Ausgestaltung hat den weiteren Vorteil, dass die Abgabestation nur auf tatsächlich zur Ausschleusung bestimmte Fördergüter einwirkt. Im Stand der Technik bekannte Vorrichtungen erfordern es regelmäßig, sämtliche Fördergüter zu verlagern, bspw. mittels der in der DE 195 36 313 A1 gezeigten Weiche. Ein solches temporäres Lösen oder Abheben der Fördergüter vom Auflagekörper kann etwa eine Reihung oder Ordnung der Fördergüter durcheinanderbringen. Insbesondere bei mit Haken versehenen Befestigungselementen, etwa Kleiderbügeln oder Ähnlichem, können die Haken an Steigungen und/oder Gefällstrecken miteinander kollidieren, ggf. sich sogar teilweise überkreuzen. Auf diese Weise können etwa undefinierte Bündel von Haken entstehen, die die weitere Handhabung deutlich erschweren. Die direkte Übernahme ausschließlich der selektierten Fördergüter vom Auflagekörper kann diesen Nachteil überwinden.

Beispielsweise in der Bekleidungsindustrie, etwa beim Zusammenstellen und Handhaben von Kommissionslieferungen, kann es erforderlich sein, eine Mehrzahl von Fördergütern zusammenzufassen, die jedoch separate Befestigungselemente (etwa Kleiderbügel) aufweisen. Dies kann etwa derart erfolgen, dass die Fördergüter einer gemeinsamen Kommissionslieferung eine gemeinsame Folienverpackung erhalten. Alternativ oder zusätzlich können die Fördergüter etwa mittels Fäden, Klebestreifen oder ähnlichen Mitteln im Bereich ihrer Befestigungselemente, insbesondere Haken, gekoppelt bzw. zusammengebunden werden. Ein derartiger Verbund kann für im Stand der Technik bekannte Abgabestationen eine große Gefahr bedeuten, da die Möglichkeit besteht, dass sich Eingriffskörper in überstehenden Komponenten (Folien, Tüten, Bindfäden, Klebeband) verfangen können. Dies kann selbst bei ausgerückten Eingriffskörpern geschehen. Dies würde nahezu unweigerlich zu einem Ausfall der Förderanlage führen.

Der seitlich zuführbare Eingriffskörper mit dem Eingriffsabschnitt kann in der Ausrückkonfiguration deutlich vom Förderpfad entfernt sein. Seitlich unterliegen die Förderträger der Förderanlage nämlich regelmäßig geringeren Bauraumrestriktionen als in der Vertikalrichtung. Ein "Aufspießen" überstehender Komponenten in der Ausrückkonfiguration ist somit nahezu ausgeschlossen.

In vorteilhafter Weiterbildung weist die Abgabestation einen Leitkörper auf, der den Auflagekörper in einer Vorzugslage ausrichtet, wobei der Eingriffskörper eine Übernahmespitze aufweist, die in der Eingriffskonfiguration in eine Ausnehmung im Leitkörper eingreift. Auf diese Weise kann das Fördergut besonders sicher ausgeschleust werden. Eine sich ergebende seitliche Überdeckung zwischen dem Leitkörper und der Übernahmespitze kann eine nahtlose Übergabe des Förderguts erlauben.

Gemäß einer weiteren Ausgestaltung weist der Eingriffsabschnitt ein Innenprofil auf, das mit einem Außenprofil des Auflagekörpers korrespondiert und das vorzugsweise als Versatzfläche gegenüber dem Außenprofil ausgebildet ist.

Mit anderen Worten kann der Eingriffsabschnitt bspw. ein Innenprofil aufweisen, das ungefähr einem halben Negativprofil eines Außenprofils des Auflagekörpers entspricht. Auf diese Weise kann auch bei einem leichten Versatz eine Selbstausrichtung zwischen dem Eingriffsabschnitt und dem Auflagekörper erfolgen.

Grundsätzlich kann es von Vorteil sein, wenn das dem Auflagerkörper zugewandte Innenprofil des Eingriffsabschnitts etwa konkav oder zumindest V-förmig gestaltet ist.

Gemäß einem weiteren Aspekt ist der Aktuator dazu ausgebildet, den Eingriffskörper um eine Schwenkachse zu verschwenken, die im Wesentlichen ungefähr senkrecht zu einer Längsrichtung und im Wesentlichen ungefähr senkrecht zu einer Querrichtung orientiert ist, wobei die Längsrichtung vorzugsweise mit der Förderrichtung korrespondiert.

Wie vorstehend erwähnt, kann auch eine Schwenkbewegung ein seitliches Zuführen beinhalten. Auf diese Weise kann der Aktuator direkt oder indirekt mit dem Eingriffskörper gekoppelt werden. Das Prinzip des seitlichen Zuführens erlaubt eine Vielzahl möglicher Anordnungen und Positionen der Aktuators. Der Aktuator kann bspw. als Stellzylinder bzw. Hubzylinder ausgestaltet sein und mit einem Hebel gekoppelt sein, der mit dem Eingriffskörper verbunden ist. Es können grundsätzlich weitere Zwischenglieder vorgesehen sein, bspw. ein Koppelgetriebe, etwa in Form einer Schubschwinge oder einer Kurbelschwinge. Der Aktuator kann ferner auch als rotatorischer Antrieb ausgebildet sein, bspw. als umlaufender oder oszillierender Motor. Der Aktuator kann einen fluidischen oder einen elektrischen Antrieb beinhalten.

Gemäß einer Weiterbildung ist der Eingriffsabschnitt in der Eingriffskonfiguration im Wesentlichen ungefähr parallel zum Förderpfad orientiert, wobei der Eingriffsabschnitt in der Ausrückkonfiguration einen, vorzugsweise spitzen, Winkel mit dem Förderpfad einschließt, der insbesondere entgegen der Förderrichtung geöffnet ist.

Auch auf diese Weise können insbesondere in der Ausrückkonfiguration Störungen oder Schäden durch überstehende Komponenten der Fördergüter vermieden werden. Selbst wenn der Eingriffsabschnitt bspw. mit einer Folie oder Ähnlichem kollidiert, ist es unwahrscheinlich, dass das passierende Fördergut, das in Richtung des entgegen der Förderrichtung geöffneten Winkels verfahren wird, vom Eingriffsabschnitt aufgehalten wird. Vielmehr kann diese Engstelle überwunden werden, der Eingriffsabschnitt kann das Fördergut auf seinem Weg leiten.

Gemäß einer weiteren Ausgestaltung definieren die Abgabestrecke und die Führungskontur des Eingriffskörpers zumindest in der Eingriffskonfiguration einen durchgängigen Abgabepfad für das Fördergut, wobei der Eingriffskörper vorzugsweise dazu ausgebildet ist, das Fördergut direkt vom Auflagekörper zu übernehmen.

Das seitliche Zuführen des Eingriffskörpers mit dem Eingriffsabschnitt kann es ferner ermöglichen, die Fördergüter direkt vom Auflagekörper zu übernehmen. Unter einer direkten Übernahme kann etwa eine Übernahme verstanden werden, bei der es nicht erforderlich ist, die Befestigungselemente der Fördergüter mittels einer separaten Einrichtung anzuheben und somit vom Auflagekörper indirekt an den Eingriffskörper zu übergeben.

Das seitliche Zuführen erlaubt es nämlich, die Befestigungselemente, vorzugsweise die Haken, der Fördergüter seitlich zu untergreifen. Ein sich ggf. anschließender Hebevorgang kann etwa direkt am Eingriffskörper erfolgen, so dass keine weiteren separaten Einrichtungen erforderlich sind.

Es kann von besonderem Vorteil sein, das Fördergut direkt vom Auflagekörper zu übernehmen. Es ist ferner bevorzugt, wenn auch nach der Übernahme des Förderguts durch den Eingriffskörper keine weiteren gesonderten Handlingvorgänge erforderlich sind, um das Fördergut der Abgabestrecke zuzuführen. Zu diesem Zweck kann die Führungskontur des Eingriffsabschnitts bspw. eine ansteigende Flanke und eine abschüssige Flanke aufweisen, so dass das Fördergut nach Überwinden der ansteigenden Flanke selbsttätig, vorzugsweise schwerkraftbedingt, die abschüssige Flanke entlang gleiten kann.

Gemäß einer weiteren Ausgestaltung weist der Eingriffsabschnitt eine Übernahmespitze auf, die sich vorzugsweise an eine Verlaufsfläche des Eingriffsabschnitts anschließt, und die in einen Einfädelbereich zwischen dem Befestigungselement eines auszuschleusenden Fördergutes und dem Auflagekörper eingreifen kann, um das Befestigungselement zu übernehmen.

Es ist weiter bevorzugt, wenn die Übernahmespitze im Wesentlichen seitlich neben dem Auflagekörper am Befestigungselement, insbesondere am Haken, angreifen kann. Der Einfädelbereich kann etwa einen Bereich umfassen, der sich seitlich zwischen einem auf dem Auflagekörper aufliegenden Befestigungselement und dem Außenprofil des Auflagekörpers ergibt. In diesem Bereich kann die Übernahmespitze zunächst eingreifen, ohne etwa den Haken des Befestigungselements anheben zu müssen.

In bevorzugter Weiterbildung weist die Abgabestation einen Leitkörper auf, der vorzugsweise parallel zum Förderpfad orientiert ist, wobei der Leitkörper den Auflagekörper in einer Vorzugslage ausrichtet, vorzugsweise richtet der Leitkörper den Auflagekörper des auszuschleusenden Fördergutes derart aus, dass die Übernahmespitze in der Eingriffskonfiguration zur Ausschleusung des Fördergutes sicher in den Einfädelbereich zwischen dem Befestigungselement und dem Auflagekörper einführbar ist.

Der Leitkörper kann eine gewünschte Orientierung der Auflagekörper und somit der passierenden Fördergüter gewährleisten. Auf diese Weise kann etwa der Haken dem Eingriffsabschnitt hochgenau zugeführt werden. Mit anderen Worten kann der Leitkörper insbesondere ein seitliches Ausweichen der Auflagekörper unterbinden. Es ist insbesondere nicht erforderlich, dass der Leitkörper die Fördergüter bereits anhebt. Gleichwohl kann sich durch die Ausrichtung der Auflagekörper mittelbar eine damit korrespondierende Vorzugsorientierung der weiterhin an dem Auflagekörper aufgenommenen Fördergüter ergeben, die den Ausschleusvorgang weiter vereinfachen kann.

Insbesondere kann etwa ein Pendeln der Fördergüter um die Längsachse wirksam unterbunden werden. Auf diese Weise kann der Einfädelbereich sicher definiert werden. Ferner kann die Gefahr des Aufspießens von Folien, Tüten oder Ähnlichem weiter reduziert werden.

Gemäß einer Weiterbildung dieser Ausgestaltung ist der Leitkörper stromaufwärts gegenüber dem Eingriffskörper versetzt und vorzugsweise gestellfest angeordnet, wobei insbesondere das Befestigungselement des passierenden Förderguts am Leitkörper entlang gleiten kann, und wobei der Leitkörper vorzugsweise den Auflagekörper zumindest partiell umschließt.

Alternativ kann der Leitkörper etwa zwei sich einander gegenüberliegende Leitflanken aufweisen, die eine seitliche Führung für den Auflagekörper bereitstellen. Der Leitkörper kann ebenso etwa als Leitblech ausgebildet sein, das den Auflagekörper V-förmig oder U-förmig, vorzugsweise von unten, umschließt.

Gemäß einer Weiterbildung weist der Leitkörper einen stromaufwärtigen Endabschnitt auf, der einen, vorzugsweise spitzen, Auslauf umfasst, der der Förderrichtung entgegengerichtet ist.

Auf diese Weise kann der Leitkörper gewissermaßen als Schutzschild für den Eingriffskörper fungieren. Somit können Beschädigungen der Abgabestation und Ausfälle der Förderanlage noch wirksamer vermieden werden. Der stromaufwärtige Endabschnitt kann überstehende Komponenten der Fördergüter abfangen bzw. um sich herum leiten. Diese können bspw. durch den Leitkörper derart in Form gebracht werden, dass sie für den nachgelagerten Eingriffskörper keine Gefahr mehr darstellen. Andererseits kann etwa dann, wenn sich die Fördergüter bereits am, vorzugsweise robust ausgeführten, Leitkörper verfangen, eine mögliche Beschädigung der dem Leitkörper entlang des Förderpfads nachgelagerten Komponenten der Abgabestation vermieden werden.

Der Leitkörper kann insbesondere als passiver Leitkörper ausgeführt sein. Das heißt, der Leitkörper weist keine eigene Antriebs- oder Verfahreinrichtung auf.

Gemäß einer Weiterbildung überdecken sich der Leitkörper und die Übernahmespitze in der Eingriffskonfiguration einander zumindest teilweise, wobei vorzugsweise die Übernahmespitze des Eingriffskörpers in der Eingriffskonfiguration in eine, vorzugsweise seitliche, Ausnehmung im Leitkörper eingreift.

Mit anderen Worten kann der Leitkörper etwa aus Sicht eines sich annähernden Fördergutes eine Silhouette aufweisen, die den diesem nachgelagerten Eingriffsabschnitt zumindest teilweise überdeckt.

Die Ausnehmung im Leitkörper kann etwa seitlich in dessen stromabwärtigen Endbereich eingebracht sein. Die Ausnehmung kann an den Eingriffsabschnitt angepasst sein und etwa mit der Übernahmespitze korrespondieren.

Die Übernahme des Fördergutes durch den Eingriffsabschnitt des Eingriffskörpers kann sich deutlich vereinfachen. Der Leitkörper, vorzugsweise dessen Umriss, kann zumindest teilweise den Raum beanspruchen, in den der Eingriffsabschnitt in der Eingriffskonfiguration hineinragt. Das Befestigungselement des Förderguts, insbesondere der Haken, kann somit nahtlos vom Leitkörper auf den Eingriffsabschnitt überführt werden, auch wenn es gleichzeitig noch auf dem Auflagekörper aufliegt.

Die Überdeckung zwischen dem Leitkörper und der Übernahmespitze kann, bezogen etwa auf den Auflagekörper, eine Überdeckung in der Längsrichtung und eine Überdeckung in einer Umfangsrichtung umfassen.

Die Aufgabe der Erfindung wird ferner gelöst durch eine Förderanlage, insbesondere eine Hängeförderanlage, mit einer Förderkette mit einer Mehrzahl von Förderträgern mit Tragsegmenten mit Auflagekörpern zur Aufnahme von Fördergütern, insbesondere Hängewaren, und mit einer Abgabestation nach einem der vorhergehenden Aspekte.

Es versteht sich, dass die Förderanlage eine Mehrzahl von Abgabestationen aufweisen kann, die die Fördergüter selektiv zu einer Mehrzahl von Abgabestrecken ausschleusen können.

Die Förderträger können etwa Tragsegmente in Form von Leitersegmenten aufweisen. Die Tragsegmente können die Auflagekörper und einen oder mehrere Befestigungsstege zur Aufnahme an den oder zur Verbindung mit den Förderträgern aufweisen.

Die Fördergüter können etwa mittels der Befestigungselemente, vorzugsweise mittels Aufnahmebügeln mit Haken, an den Auflagekörpern aufgenommen sein.

Gemäß einer Weiterbildung dieser Ausgestaltung weisen die Tragsegmente zumindest einen, vorzugsweise ungefähr vertikal verlaufenden, Befestigungssteg zur Aufnahme des Auflagekörpers an den Förderträgern auf.

Der zumindest eine Befestigungssteg kann ferner dazu genutzt werden, das auszuschleusende Fördergut entlang der Führungskontur des Eingriffskörpers zu schieben, insbesondere entlang einer ansteigenden Flanke. Somit bedarf es keines separaten Antriebs zum Anheben der auszuschleusenden Fördergüter. Beim Anheben entlang der ansteigenden Flanke des Eingriffskörpers werden die Befestigungselemente der Fördergüter von der Auflage auf den Auflagekörpern gelöst. Die Befestigungselemente der Fördergüter, die nicht ausgeschleust werden sollen, können grundsätzlich auf den Auflagekörpern liegen bleiben.

Gemäß einer weiteren Ausgestaltung erstrecken sich die Auflagekörper im Wesentlichen in der Längsrichtung, vorzugsweise stabförmig, wobei die Auflagekörper ein Außenprofil aufweisen, und wobei der Eingriffsabschnitt des Eingriffskörpers ein Innenprofil aufweist, das zumindest abschnittsweise mit dem Außenprofil korrespondiert.

Der Auflagekörper kann etwa im Wesentlichen rund oder zylinderförmig gestaltet sein. Es versteht sich ebenso, dass der Auflagekörper, vorwiegend in seinem oberen Bereich, in dem die Befestigungselemente aufliegen können, an eine Kontur der Haken der Befestigungselemente angepasst sein kann.

Um zu gewährleisten, dass sich ein bestimmter Einfädelbereich zwischen dem Auflagekörper und den Befestigungselementen einstellt, empfiehlt es sich, einen seitlichen Freiraum zwischen dem Auflagekörper und einem aufgenommenen Befestigungselement zu wahren.

Gemäß einem weiteren Aspekt der Förderanlage sind die die Befestigungsstege außermittig an den Auflagekörpern der Tragsegmente angeordnet.

Die außermittige Anordnung kann insbesondere eine in der Z-Richtung von einer Mittelachse der Auflagekörper versetzte Anordnung umfassen. Die Mittelachse der Auflagekörper kann mit der Längsachse zusammenfallen.

Auf diese Weise kann der Eingriffsabschnitt des Eingriffskörpers den Auflagekörper seitlich ungefähr maximal halbkreisförmig umschließen. Somit kann sich eine besonders gute Anschmiegung des Eingriffsabschnitts an den Auflagekörper einstellen.

Hinsichtlich des Verfahrens wird die Aufgabe der Erfindung durch ein Verfahren zum selektiven Ausschleusen von, vorzugsweise hängend transportierten, Fördergütern aus einem Förderpfad einer Förderanlage, insbesondere einer Hängeförderanlage, gelöst, mit den folgenden Schritten:
- Verfahren von mittels Befestigungselementen an Auflagekörpern aufgenommenen Fördergütern entlang des Förderpfades;
- vorzugsweise Ausrichten der Auflagekörper mittels eines Leitkörpers in einer Vorzugslage, um einen Einfädelbereich zu definieren;
- selektives Verlagern eines Eingriffskörpers mit einem Eingriffsabschnitt zwischen einer Ausrückkonfiguration und einer Eingriffskonfiguration mittels eines Aktuators, umfassend ein im Wesentlichen seitliches Zuführen des Eingriffsabschnitts auf den Auflagekörper, wobei der Eingriffsabschnitt in der Eingriffskonfiguration an den Auflagekörper angenähert ist und sich vorzugsweise seitlich zumindest partiell an den Auflagekörper anschmiegt; und
- direktes Übernehmen eines gewählten auszuschleusenden Fördergutes vom Auflagekörper mittels einer Führungskontur des Eingriffskörpers, und Überführen des aufgenommenen Fördergutes an eine Abgabestrecke, dabei vorzugsweise zumindest temporäre Mitnahme des gewählten Fördergutes durch Befestigungsstege der Auflagekörper.

Auch auf diese Weise wird die Aufgabe der Erfindung vollständig gelöst.

Das Verfahren kann vorzugsweise mit einer Förderanlage nach einem der oben genannten Aspekte durchgeführt werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine schematische vereinfachte Draufsicht einer Förderanlage;
- Fig. 2: eine gebrochene Seitenansicht einer Förderkette mit Förderträgern, die an einer Führungsschiene einer Förderanlage aufgenommen sind;
- Fig. 3: eine perspektivische Ansicht einer Abgabestation, die einer Führungsschiene einer Förderanlage zugeordnet ist, in einer Ausrückkonfiguration;
- Fig. 4: eine weitere gebrochene perspektivische Ansicht der Abgabestation gemäß Fig. 3 in einer Eingriffskonfiguration;
- Fig. 5: eine geschnittene Rückansicht eines Förderträgers, der mittels eines Leitkörpers geführt ist;
- Fig. 6a, 6b: Darstellungen verschiedener Querschnitte von Auflagekörpern und damit korrespondierenden Leitkörpern;
- Fig. 7a, 7b: weitere Querschnittsansichten eines Auflagekörpers mit einem aufgenommenen Befestigungselement, wobei ein Einfädelbereich gezeigt ist, in den ein Eingriffsabschnitt einführbar ist;
- Fig. 8a, 8b: schematisch vereinfachte Draufsichten einer Abgabestation in einer Ausrückkonfiguration und einer Eingriffskonfiguration;
- Fig. 9: eine Seitenansicht der Abgabestation gemäß Fig. 4; und
- Fig. 10: ein Flussdiagramm eines Verfahrens zum selektiven Ausschleusen von Fördergütern aus einem Förderpfad einer Förderanlage.

Bei der nachfolgenden Beschreibung der Erfindung werden gleiche Teile und Merkmale mit gleichen Bezugszeichen versehen, wobei die in der gesamten Beschreibung enthaltenen Offenbarungen sinngemäß auf gleiche Teile und Merkmale mit gleichen Bezugszeichen übertragen werden können. Lageangaben wie z.B. "oben", "unten", "seitlich" etc. sind auf die unmittelbar beschriebene Figur bezogen und bei einer Lageänderung sinngemäß auf die neue Lage zu übertragen.

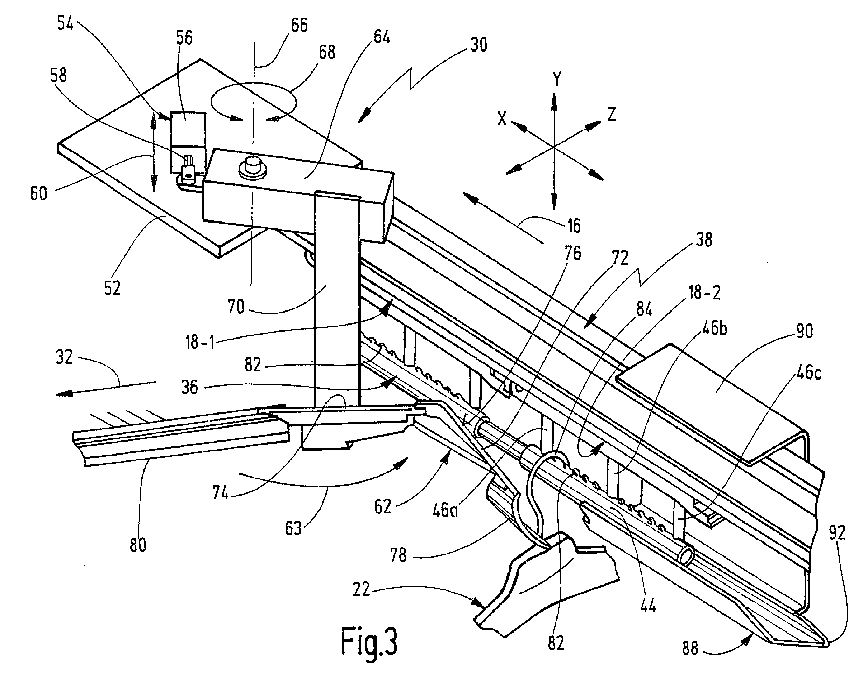

Ferner ist zu beachten, dass Richtungsangaben und Orientierungen zugrunde gelegt werden, die sich grundsätzlich an die in der (Intra-)Logistik üblichen Bezeichnungen anlehnen. Folglich wird die Längsrichtung (Förderrichtung) mit "X", die Tiefe (Breite) mit "Z" und die (vertikale) Höhe mit "Y" bezeichnet. Beispielsweise kann Fig. 3 ein damit korrespondierendes (kartesisches) Koordinatensystem X, Y, Z entnommen werden.

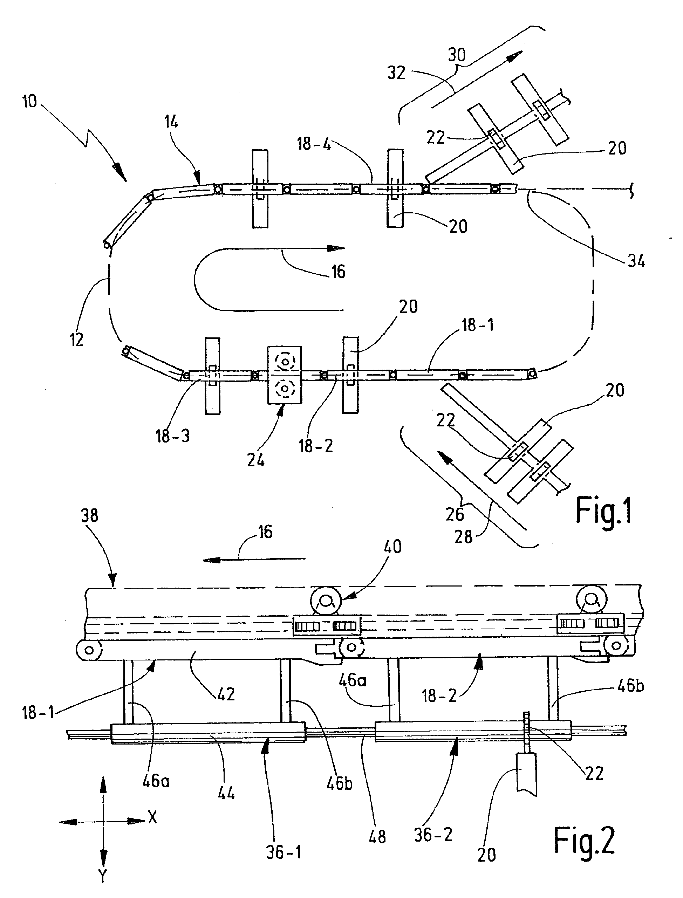

Fig. 1 zeigt eine schematisch stark vereinfachte Draufsicht einer Förderanlage 10. Die Förderanlage 10 kann etwa als Hängeförderanlage ausgebildet sein. Die Förderanlage 10 kann allgemein zum Transport hängender Waren genutzt werden. Dabei kann es sich etwa um Kleidungsstücke, Textilien allgemein, ebenso jedoch auch um in Ladehilfsmittel aufgenommene Fördergüter handeln. Die Ladehilfsmittel können etwa als sog. Fördertaschen ausgebildet sein. Eine zum hängenden Transport besonders geeignete Fördertasche ist in der deutschen Patentanmeldung DE 10 2011 101 987.5 beschrieben, die am 17.05.2011 eingereicht wurde und auf die hiermit in vollem Umfang Bezug genommen wird.

Die Förderanlage 10 weist zumindest einen Förderpfad 12 auf. Entlang des Förderpfads 12 erstreckt sich eine Förderkette 14 (in Fig. 1 partiell ausgeblendet). Die Förderkette 14 kann in geeigneter Weise in einer Förderrichtung 16 entlang des Förderpfads 12 angetrieben werden. Die Förderkette 14 weist eine Mehrzahl miteinander gekoppelter Förderträger 18 auf. Die Förderträger 18 können beispielhaft etwa als Glieder der Förderkette 14 aufgefasst werden.

An den Förderträgern 18 können Fördergüter 20 aufgenommen sein. Die Fördergüter 20 können mittelbar oder unmittelbar mit den Förderträgern 18 verbunden sein. Beispielsweise können Fördergüter 20 über Befestigungselemente 22 an den Förderträgern 18 aufgenommen sein. Die Befestigungselemente 22 können beispielhaft etwa als Bügel, insbesondere als Kleiderbügel ausgestaltet sein. Grundsätzlich können die Befestigungselemente 22 Haken aufweisen oder hakenförmig ausgebildet sein (vgl. Bezugszeichen 84 in Fig. 3). Insbesondere dann, wenn die Fördergüter 20 in einem Ladehilfsmittel, etwa einer Fördertasche, aufgenommen sind, können sich andere Gestaltungen ergeben, die jedoch auch mit einem Haken 84 (Fig. 3) zur Aufnahme am Förderträger 18 versehen sein können.

Der Förderkette 14 der Förderanlage 10 kann ferner zumindest eine Antriebseinrichtung 24 zu deren Vortrieb zugeordnet sein. Grundsätzlich kann die Förderkette 14 etwa mittels eines umlaufenden Zugmittels angetrieben bzw. mitgenommen werden. Die Förderkette 14 kann jedoch alternativ auch selbst als Zugmittel fungieren. Die Förderkette 14 kann etwa als sog. Zugstangenkette ausgebildet sein. Eine solche Zugstangenkette mit Förderträgern 18 ist in der deutschen Patentanmeldung DE 10 2010 053 426.9 beschrieben, die am 30.11.2010 eingereicht wurde. Auf den Inhalt dieser Anmeldung wird hiermit in vollem Umfang Bezug genommen.

Die Antriebseinrichtung 24 kann etwa als Reibrollenantrieb ausgebildet sein. Hierzu kann die Antriebseinrichtung 24 über zumindest eine Reibrolle auf einen passierenden Förderträger 18 zu dessen Fortbewegung einwirken. Alternativ dazu kann die Antriebseinrichtung 24 etwa auch als im Wesentlichen formschlüssiger Antrieb ausgestaltet sein. Zu diesem Zweck können etwa Zahnräder auf passierende Förderträger 18 zu deren Vortrieb einwirken. Die Antriebseinrichtung 24 kann auch anderweitig gestaltet sein, bspw. ist eine mittelbare Mitnahme der Förderträger 18 über ein Zugmittel (in Fig. 1 nicht dargestellt) denkbar.

Die Förderanlage 10 weist ferner eine Aufgabestation 26 auf, die dazu ausgebildet ist, Fördergüter 20 in den Förderpfad 12 einzuschleusen, vgl. auch Pfeil 28, der eine Aufgaberichtung beschreibt. Die Aufgabestation 26 kann etwa eine Rutschstrecke oder dergleichen sowie Elemente zur selektiven Freigabe eines einzuschleusenden Förderguts 20 aufweisen. Die Förderanlage 10 weist ferner eine Abgabestation 30 auf, die dazu ausgebildet ist, Fördergüter 20 in einer Abgaberichtung 32 aus dem Förderpfad 12 auszuschleusen.

Ferner ist in Fig. 1 mit 34 eine Weiche oder Verzweigung im Förderpfad 12 angedeutet. Der Förderpfad 12 kann etwa als geschlossener Förderpfad 12 ausgeführt sein, insbesondere bei einem sogenannten Kreisförderer. Der Förderpfad 12 kann jedoch ebenso abschnittsweise oder vollständig als offener Förderpfad 12 ausgeführt sein, etwa bei einem Linearförderer. Andere Gestaltungen, insbesondere Kombinationen aus offenen und geschlossenen Förderpfaden 12 sind denkbar.

In Fig. 1 ist der Förderträger 18-1 zur Beschickung mittels der Aufgabestation 26 bereitgestellt. Am Förderträger 18-2 ist bereits ein Fördergut 20 aufgenommen. Der Förderträger 18-2 ist in Bezug auf die Antriebseinrichtung 24 im Förderpfad 12 entgegen der Förderrichtung 16 versetzt (auch bezeichnet als stromaufwärts versetzt). Der Förderträger 18-3 ist bezüglich der Antriebseinrichtung 24 entlang des Förderpfads 12 in der Förderrichtung 16 versetzt (auch bezeichnet als stromabwärts versetzt). Es versteht sich, dass die Begriffe stromaufwärts und stromabwärts jeweils als Relativlagen zu einem Bezugspunkt, also etwa der Antriebseinrichtung 24 in Fig. 1 oder einem anderen Förderträger 18, verstanden werden können. Der Förderträger 18-4, an dem auch ein Fördergut 20 aufgenommen ist, kann entlang des Förderpfads 12 in Richtung auf die Abgabestation 30 verfahren werden. Die Abgabestation 30 kann dazu ausgebildet sein, das Fördergut 20 des Förderträgers 18-4 selektiv aus dem Förderpfad 12 auszuschleusen.

Es versteht sich, dass dem Förderpfad 12 und/oder der Förderanlage 10 ebenso auch eine Mehrzahl von Aufgabestationen 26 und/oder Abgabestationen 30 zugeordnet sein können. Ebenso ist es denkbar, eine Mehrzahl von Antriebseinrichtungen 24 vorzusehen.

Fig. 2 zeigt eine seitliche Ansicht zweier miteinander gekoppelter Förderträger 18-1 und 18-2, die an einer Führungsschiene 38 (in Fig. 2 durch gestrichelte Linien angedeutet) aufgenommen sind. Die Führungsschiene 38 kann eine Verkörperung des Förderpfads 12 darstellen. Im Folgenden können daher die Begriffe Führungsschiene 38 und Förderpfad 12 synonym verwendet werden. Die Führungsschiene 38 kann etwa ein geeignetes Führungsprofil aufweisen, an dem ein Traggelenk 40 aufgenommen sein kann. Das Traggelenk 40 kann geeignete Führungsmittel, etwa Führungsrollen, aufweisen, um eine Führung der Förderträger 18-1 und 18-2 in einer Y-Richtung und einer Z-Richtung (Fig. 3) zu gewährleisten. Die Förderträger 18-1 und 18-2 können miteinander unmittelbar oder mittelbar etwa unter Einbeziehung des Traggelenks 40, gekoppelt sein. Insbesondere können die Förderträger 18-1 und 18-2 derart miteinander gelenkig gekoppelt sein, dass sich beim Durchfahren eines gekrümmten Förderpfads 12 zwischen den Förderträgern 18-1 und 18-2 Ausgleichsschwenkbewegungen ergeben können. Beispielhafte Gestaltungen der Förderträger 18 können der oben genannten deutschen Patentanmeldung DE 10 2010 053 426.9 entnommen werden.

An den Förderträgern 18-1 und 18-2 sind Tragsegmente 36-1 und 36-2 aufgenommen. Die Tragsegmente 36 können etwa als separate Teile ausgeführt und zur Aufnahme an einem Grundkörper 42 der Förderträger 18 ausgebildet sein. In alternativer Weise können die Tragsegmente 36 als integraler Bestandteil der Förderträger 18 ausgeführt sein. Die Tragsegmente 36 weisen einen Auflagekörper 44 auf, der etwa mittels zumindest eines Befestigungsstegs 46 mit dem Grundkörper 42 der Förderträger 18 koppelbar ist. In Fig. 2 weist beispielhaft das Tragsegment 36-1 einen ersten (stromabwärtigen) Befestigungssteg 46a und einen zweiten (stromaufwärtigen) Befestigungssteg 46b auf. Gemäß einer alternativen Gestaltung, die etwa in Fig. 3 gezeigt ist, können etwa auch drei oder mehr Befestigungsstege 46a, 46b und 46c vorgesehen sein. Daneben ist es auch denkbar, die Tragsegmente mittels nur eines einzigen Befestigungsstegs 46 mit dem Grundkörper 42 der Förderträger 18 zu verbinden. Eine derartige Gestaltung des Tragsegments 36 kann der deutschen Patentanmeldung DE 10 2011 118 303.9 entnommen werden, die am 08.11.2011 eingereicht wurde. Auf den Inhalt dieser Anmeldung wird hiermit in vollem Umfang Bezug genommen.

Die Auflagekörper 44 der Tragsegmente 36-1 und 36-2 sind zur Aufnahme der Fördergüter 20, insbesondere der Befestigungselemente 22 (vgl. etwa den Haken 84 in Fig. 3) ausgebildet. Gemäß der in Fig. 2 gezeigten Gestaltung können die Fördergüter 20 insbesondere zwischen den Befestigungsstegen 46a und 46b auf dem Auflagekörper 44 aufgenommen sein.

Zwischen den Auflagekörpern 44 der Tragsegmente 36-1 und 36-2 der aufeinanderfolgenden Förderträger 18-1 und 18-2 ist ein Ausgleichskörper 48 vorgesehen. Der Ausgleichskörper 48 kann etwa zumindest teilweise elastisch ausgestaltet sein. Der Ausgleichskörper 48 kann insbesondere aus einem elastischen Werkstoff, vorzugsweise einem elastomeren Werkstoff gestaltet sein. Der Ausgleichskörper 48 kann dazu vorgesehen sein, Ausgleichsschwenkbewegungen zwischen den Förderträgern 18-1 und 18-2 und den an diesen aufgenommenen Tragsegmenten 36-1 und 36-2 beim Durchfahren eines gekrümmten Förderpfads 12 zu erlauben. Gleichwohl kann der Ausgleichskörper 48 eine gewisse Lagezuordnung zwischen den Auflagekörpern 44 des stromabwärtigen Tragsegments 36-1 und des stromaufwärtigen Tragsegments 36-2 bewirken. Nähere Ausführungen zum Ausgleichskörper 48 können der oben genannten deutschen Patentanmeldung DE 10 2011 118 303.9 entnommen werden.

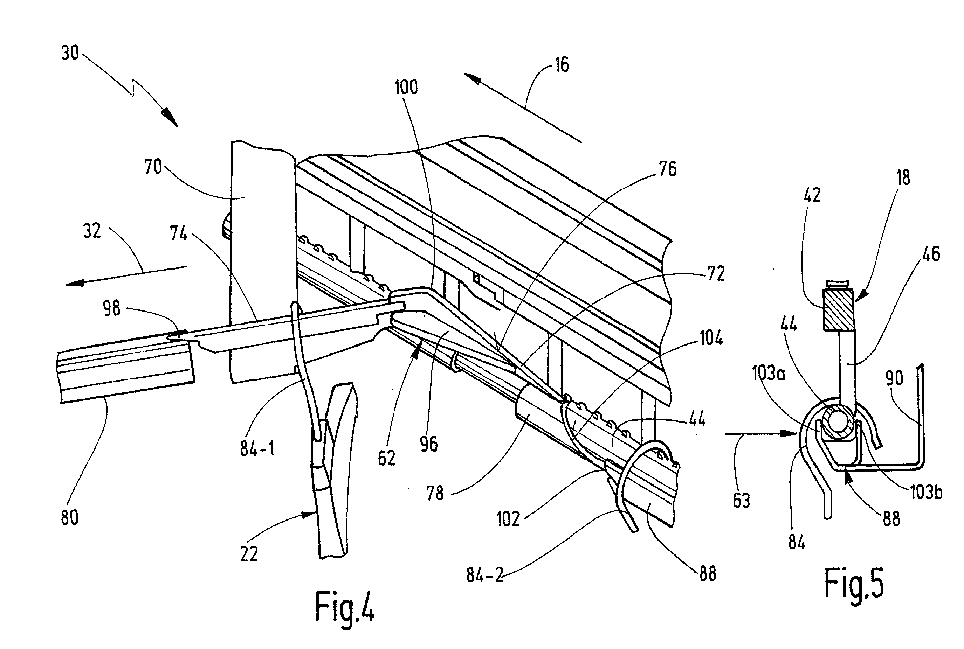

Fig. 3 zeigt eine perspektivische Ansicht einer Abgabestation 30. Die Abgabestation 30 kann dem Förderpfad 12 der Förderanlage 10 (Fig. 1) zugeordnet sein, um ein selektives (seitliches) Ausschleusen von Fördergütern 20 aus dem Förderpfad 12 zu ermöglichen. Zu diesem Zweck kann die Abgabestation 30 selektiv angesteuert werden. Die Abgabestation 30 kann wahlweise bestimmte Konfigurationen einnehmen, etwa eine Eingriffskonfiguration und eine Ausrückkonfiguration. In Fig. 3 ist die Abgabestation 30 in der Ausrückkonfiguration dargestellt. Demgegenüber ist die Abgabestation 30 in Fig. 4 in der Eingriffskonfiguration gezeigt.

In der Ausrückkonfiguration gemäß Fig. 3 können die Förderträger 18-1 und 18-2 mit den daran aufgenommenen Fördergütern 20 (in Fig. 3 und Fig. 4 nicht dargestellt) die Abgabestation 30 passieren, ohne dass die Fördergüter 20 den Förderpfad 12 verlassen. In der Eingriffskonfiguration ist die Abgabestation 30 dazu ausgebildet, die Fördergüter 20 von passierenden Förderträgern 18 zu übernehmen und aus dem Förderpfad 12 auszuschleusen.

Die Abgabestation 30 gemäß Fig. 3 weist einen Aktuator 54 auf, der etwa an einer Grundplatte 52 aufgenommen sein kann. Die Grundplatte 52 kann gestellseitig mit der Förderanlage 10 gekoppelt sein. Beispielhaft kann die Grundplatte 52 an der Führungsschiene 38 angebracht sein.

Der Aktuator 54 weist beispielhaft einen Stellzylinder 56 mit einer ausfahrbaren Kolbenstange 58 auf. Die Kolbenstange 58 kann mittelbar oder unmittelbar mit einem Eingriffskörper 62 gekoppelt sein, um diesen zu verlagern. Die Kolbenstange 58 kann etwa translatorisch verfahren werden (Pfeil 60 in Fig. 3, der etwa in einer X-Z-Ebene angeordnet sein kann). Gemäß der in Fig. 3 gezeigten Gestaltung kann der Eingriffskörper 62 über einen Schwenkhebel 64 mit der Kolbenstange 58 verbunden sein. Der Schwenkhebel 64 kann etwa derart gelagert sein, bspw. an der Grundplatte 52, dass die Kolbenstange 58 in geeigneter Weise auf ihn einwirken kann, um den Schwenkhebel 64 selektiv um eine Schwenkachse 66 zu verschwenken (Pfeil 68). Der Schwenkhebel 64 kann mit einem Ausleger 70 verbunden sein, an dem der Eingriffskörper 62 aufgenommen ist. Es versteht sich, dass etwa dann, wenn der Aktuator 54 und/oder der Schwenkhebel 64 in einer anderen als der in Fig. 3 gezeigten Position angeordnet sind, der Ausleger 70 entsprechend gestaltet sein kann.

Der Stellzylinder 56 kann bspw. zwei definierte Endlagen für die Kolbenstange 58 bereitstellen, die einen möglichen (maximalen) Hub der Kolbenstange 58 bestimmen. Demgemäß kann sich bei der Gestaltung gemäß Fig. 3 beim Verfahren der Kolbenstange 58 eine Bewegung des Eingriffskörpers 62 ergeben, die etwa dazu genutzt werden kann, die Abgabestation 30, insbesondere den Eingriffskörper 62, zwischen der Ausrückkonfiguration und der Eingriffskonfiguration zu verlagern.

Grundsätzlich kann der Aktuator 54, etwa wie in Fig. 3 gezeigt, als Linearantrieb ausgestaltet sein. Es ist jedoch ebenso denkbar, den Aktuator 54 als rotatorischen Antrieb auszubilden und bspw. koaxial zur Schwenkachse 66 anzuordnen. Auch auf diese Weise kann der Eingriffskörper 62 zwischen der Ausrückkonfiguration und der Eingriffskonfiguration verlagert werden. Daneben ist es denkbar, statt einer Schwenkbewegung für den Eingriffskörper 62 eine Schubbewegung oder eine kombinierte Schwenkschubbewegung zu nutzen, um den Eingriffskörper 62 selektiv zu verlagern. Ferner kann der Aktuator 54 etwa einen Koppeltrieb aufweisen, bspw. eine Kurbelschwinge oder Ähnliches, um den Eingriffskörper 62 zu verlagern.

Der Eingriffskörper 62 kann etwa segmentartig aufgebaut sein. Der Eingriffskörper 62 weist beispielhaft eine ansteigende Flanke 72 und eine abschüssige Flanke 74 auf. Entlang beider Flanken 72 und 74 kann sich eine Führungskontur 76 erstrecken, entlang der das Fördergut 20 aus dem Förderpfad 12 (in Fig. 3 verkörpert durch die Führungsschiene 38) herausgeführt werden kann. Der Eingriffskörper 62 weist ferner einen Eingriffsabschnitt 78 auf, der etwa als stromaufwärtiger Abschluss des Eingriffskörpers 62 gestaltet ist. Der Eingriffsabschnitt 78 kann in besonderer Weise dazu ausgestaltet sein, mit den Auflagekörpern 44 der Tragsegmente 36 zusammenzuwirken, um die gewählten Fördergüter 20 auszuschleusen. Der Eingriffsabschnitt 78 ist in Fig. 3 exemplarisch als Halbrohrsegment ausgeführt.

Ferner ist in Fig. 3 eine Abgabestrecke 80 gezeigt, an die ein von der Abgabestation 30 auszuschleusendes Fördergut 20 übergeben werden kann. Die Abgabestrecke 80 kann etwa als Gefällstrecke (Abwurfstange) ausgeführt sein, um ein Verfahren der ausgeschleusten Fördergüter 20 durch deren Eigengewicht zu erlauben. Alternativ oder zusätzlich kann die Abgabestrecke 80 mit einer Antriebseinrichtung (in Fig. 3 nicht dargestellt) versehen sein, um die ausgeschleusten Fördergüter 20 abzutransportieren.

Gemäß der in Fig. 3 gezeigten Darstellung können die Auflagekörper 44 der Tragsegmente 36 Erhebungen oder Noppen 82 aufweisen, um mögliche Vorzugsauflagepositionen in der Längsrichtung (X-Richtung) für die aufgenommenen Fördergüter 20 vorzugeben. Es kann insbesondere eine Mehrzahl der Erhebungen oder Noppen 82 auf dem Auflagekörper 44 vorgesehen sein. Das in Fig. 3 gebrochen dargestellte Befestigungselement 22 ist mit einem Haken 84 versehen, der zur Auflage auf dem Auflagekörper 44 ausgebildet ist. Der Haken 84 kann etwa als Teil eines Kleiderbügels oder dergleichen ausgeführt sein. Der Haken 84 kann jedoch ebenso auch mit einem Ladehilfsmittel, etwa einer Fördertasche, gekoppelt sein, um dieses an den Auflagekörpern 44 aufnehmen zu können.

Die Abgabestation 30 gemäß Fig. 3 kann ferner ein Leitkörper 88 zugeordnet sein, der etwa entgegen der Förderrichtung 16 (stromaufwärts) versetzt zum Eingriffskörper 62 angeordnet sein kann. Der Leitkörper 88 kann die Auflagekörper 44 und folglich (mittelbar) die Befestigungselemente 22 (nachfolgend exemplarisch Haken 84) in einer Weise ausrichten, die eine Übernahme der Haken 84 durch den Eingriffskörper 62 der Abgabestation 30 vereinfacht. Beispielhaft kann der Leitkörper 88 mittels eines Befestigungskörpers 90 gestellfest an der Förderanlage 10 aufgenommen sein. Insbesondere kann der Leitkörper 88 mit der Führungsschiene 38 verbunden sein. Der Leitkörper 88 weist einen stromaufwärtigen Endabschnitt 92 auf, der etwa als Endspitze ausgestaltet sein kann. Nähere Gestaltungen des Leitkörpers 88 und ein mögliches Zusammenwirken mit dem Eingriffskörper 62 werden nachfolgend anhand der Figuren 5 bis 9 erläutert.

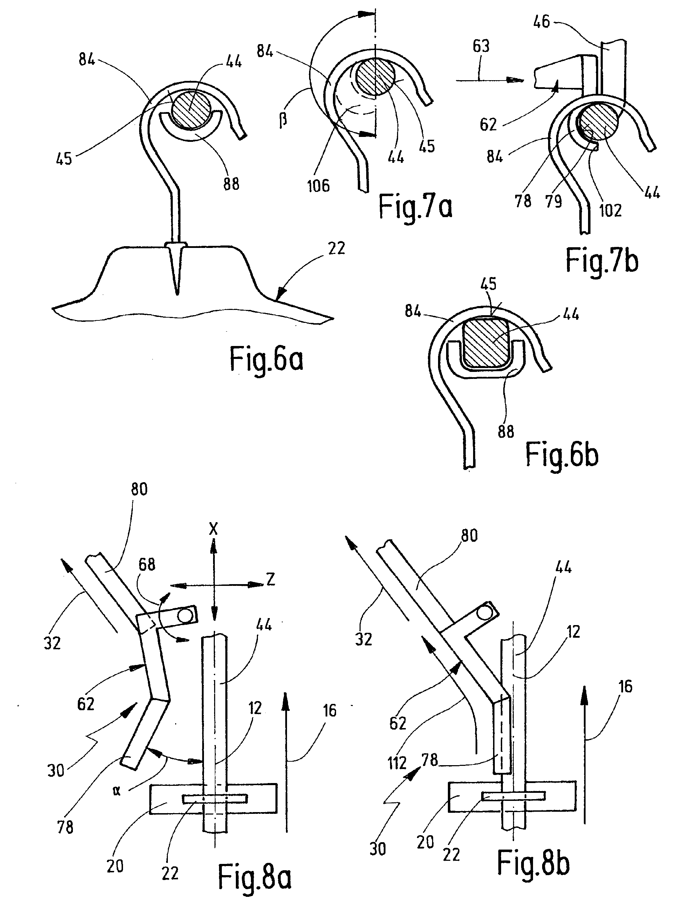

In Fig. 4 ist die Abgabestation gemäß Fig. 3 in der Eingriffskonfiguration dargestellt. In der Eingriffskonfiguration kann der Eingriffskörper 62 derart an die passierenden Auflagekörper 44 angenähert sein, dass eine Übernahme der Haken 84 ermöglicht ist. Zu diesem Zweck ist es bevorzugt, wenn der Eingriffsabschnitt 78 des Eingriffskörpers 62 an ein Außenprofil 45 (Fig. 6a und 6b) der Auflagekörper 44 angepasst ist. Gemäß der in den Figuren 3 und 4 gezeigten Ausgestaltung sind die Auflagekörper 44 etwa stabförmig, vorzugsweise rund, insbesondere zylinderförmig gestaltet und weisen eine Längserstreckung in der X-Richtung auf, die im Wesentlichen mit der Förderrichtung 16 bzw. dem Förderpfad 12 korrespondiert. Neben runden Außenprofilen 45 sind grundsätzlich auch Ovalprofile, Dreieckprofile, Viereckprofile oder Ähnliches vorstellbar. Der Eingriffsabschnitt 78 kann ein Innenprofil 79 (Fig. 7b) aufweisen, das zumindest abschnittsweise als Negativ des Außenprofils 45 des Auflagekörpers 44 ausgeführt ist. Auf diese Weise kann der Eingriffsabschnitt 78 besonders nahe, vorzugsweise im Wesentlichen ungefähr bündig an den Auflagekörper 44 herangeführt werden. In der Eingriffskonfiguration kann sich der Eingriffsabschnitt 78 an den Auflagekörper 44 anschmiegen. Beispielhaft kann der Eingriffsabschnitt 78 zumindest abschnittsweise einen Querschnitt in Form eines Kreisringabschnitts aufweisen.

Vorzugsweise kann der Eingriffskörper 62 mit dem Eingriffsabschnitt 78 beim Übergang zwischen der Eingriffskonfiguration und der Ausrückkonfiguration im Wesentlichen ungefähr seitlich, also etwa in der Z-Richtung, verlagert bzw. verfahren werden. Es versteht sich, dass grundsätzlich auch gegenüber der Z-Richtung geneigte, ferner sogar gekrümmte Zuführbahnen für den Eingriffskörper 62 und den Eingriffsabschnitt 78 denkbar sind (vgl. Pfeil 63 in Fig. 3). Es ist jedoch auch bei diesen Gestaltungen möglich, den Eingriffsabschnitt 78 seitlich an den Auflagekörper 44 heranzuführen. Wie vorstehend erwähnt, kann das seitliche Zuführen auch Zuführbewegungen umfassen, die nicht ideal parallel zur Z-Achse orientiert sind. Der Eingriffsabschnitt 78 kann den Auflagekörper 44 seitlich zumindest abschnittsweise, bspw. etwa halbkreisförmig, umschließen. Mit anderen Worten kann der Eingriffsabschnitt 78 etwa als partielle Halbmanschette für den Auflagekörper 44 gestaltet sein. Somit kann ein Umschließungswinkel β (Fig. 7a) etwa max. 180° betragen.

Der Eingriffskörper 62 weist einen Winkel 96 (Fig. 4) auf, der etwa zur Versteifung und/oder Festigkeitserhöhung vorgesehen sein kann. Der Winkel 96 kann bspw. einen Übergangsbereich 100 zwischen der ansteigenden Flanke 72 und der abschüssigen Flanke 74 verstärken. Insgesamt kann der Eingriffskörper 62 etwa als Blechkonstruktion mit einer Mehrzahl von Einzelkomponenten ausgestaltet sein. Andere Gestaltungen sind denkbar, bspw. eine zumindest teilweise integrierte Gestaltung mit Druckguss- oder Spritzgussteilen. Es ist ferner ebenso möglich, zumindest einige der beim Eingriffskörper 62 verbauten Komponenten spanend herzustellen.

An seinem der Abgabestrecke 80 zugewandten Ende weist der Eingriffskörper 62 einen Übergabeabschnitt 98 auf, der insbesondere zumindest in der Eingriffskonfiguration die Abgabestrecke 80 zumindest teilweise überdeckt. Der Übergabeabschnitt 98 kann gewährleisten, dass ein auszuschleusendes Fördergut 20 sicher an die Abgabestrecke 80 übergeben wird. In Fig. 4 ist der Haken 84-1 aus dem Förderpfad 12 ausgeschleust und kann entlang der abschüssigen Flanke 74 über den Übergabeabschnitt 98 auf die Abgabestrecke 80 überführt werden. Dies kann grundsätzlich auch selbsttätig erfolgen, etwa mittels schwerkraftbedingtem Rutschen. Die Übergabe an die Abgabestrecke 80 kann vorzugsweise auch in der Ausrückkonfiguration erfolgen. Insofern kann es von Vorteil sein, wenn der Übergabeabschnitt 98 auch in der Ausrückkonfiguration die Abgabestrecke 80 überdeckt. Somit kann die Abgabestation 30 kurze Taktzeiten und höhere Fördergeschwindigkeiten ermöglichen, da auch die "passive "Ausrückkonfiguration zum Ausschleusen genutzt werden kann.

In alternativer Ausgestaltung kann der Eingriffskörper 62 insbesondere im Bereich des Übergabeabschnitts 98 etwa gelenkig mit der Abgabestrecke 80 gekoppelt sein. In diesem Fall kann es sich empfehlen, eine Gelenkverbindung vorzusehen, deren Drehpunkt etwa im Wesentlichen mit der Schwenkachse 66 (Fig. 3) zusammenfällt. Es ist jedoch ohne weiteres möglich, den Übergabeabschnitt 98 ohne ein derartiges Gelenk auszuführen, wenn der Übergabeabschnitt 98 die Abgabestrecke 80 etwa derart überdeckt, dass die abschüssige Flanke 74 entlang gleitende Fördergut 20 sicher an die Abgabestrecke 80 übergeben werden kann.

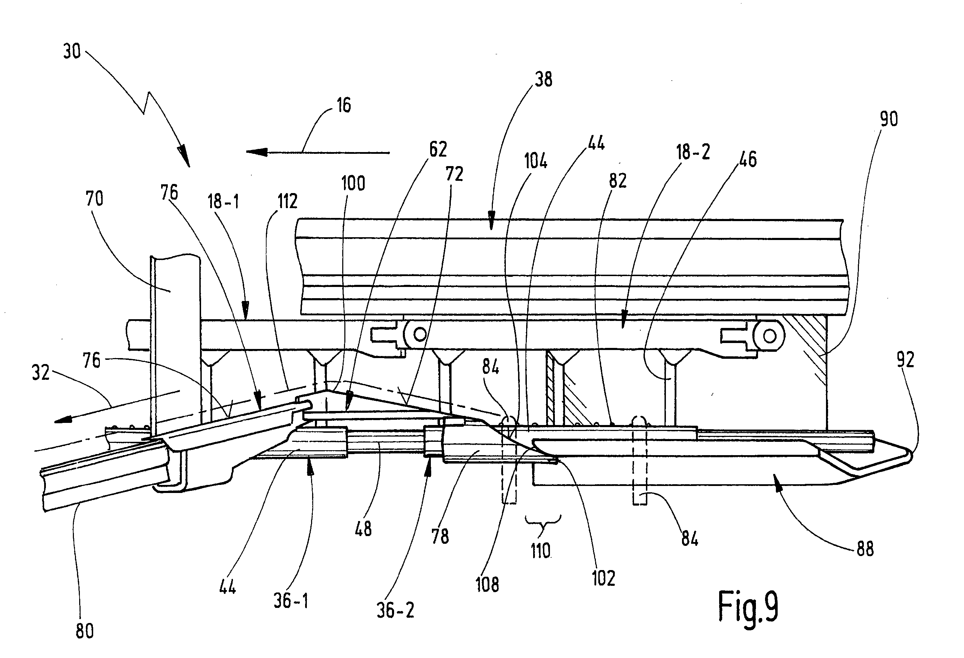

An seinem stromaufwärtigen Ende weist der Eingriffskörper 62 eine Übernahmespitze 102 auf, die insbesondere als Auslauf des Eingriffsabschnitts 78 ausgestaltet sein kann. Die Übernahmespitze 102 kann etwa das Ende einer Verlaufsfläche 104 verkörpern, die etwa als eine stromaufwärts gerichtete Verjüngung des Eingriffsabschnitts 78 gestaltet sein kann, vgl. auch Fig. 9. Somit kann der Eingriffsabschnitt 78 etwa als Rohrsegment, vorzugsweise als Halbrohrsegment, Viertelrohrsegment oder dgl. gestaltet sein und einen Schrägschnitt ("Gehrungsschnitt") entlang der Verlaufsfläche 104 aufweisen.

Fig. 5 zeigt einen Längsschnitt durch einen der Förderträger 18, an dem ein Haken 84 aufgenommen ist, im Bereich des Leitkörpers 88. Der Leitkörper 88 weist etwa zwei Flanken 103a und 103b auf, die den Auflagekörper 44 in der Querrichtung (Z-Richtung) beidseitig führen können. Ferner kann der Leitkörper 88 eine Vorzugsorientierung des Hakens 84 bewirken, etwa dergestalt, dass der Haken 84 nicht in einen vom Leitkörper 88 beanspruchten Bauraum eindringen kann.

In Fig. 5 ist ferner ersichtlich, dass der Befestigungssteg 46, der den Auflagekörper 44 mit dem Förderträger 18 verbindet, in der Z-Richtung außermittig am Auflagekörper 44 angeordnet sein kann. Diese Gestaltung kann ein seitliches Zuführen und/oder seitliches Anliegen des Eingriffsabschnitts 78 des Eingriffskörpers 62 am Auflagekörper 44 vereinfachen, vgl. hierzu auch Fig. 7b und Pfeil 63. Auf diese Weise kann eine hohe Überdeckung zwischen dem Eingriffsabschnitt 78 und dem Auflagekörper 44 gewährleistet werden.

Ergänzend zu Fig. 5 zeigen Fig. 6a und Fig. 6b verschiedene Querschnittsansichten (Außenprofile 45) von Auflagekörpern 44, an denen die Haken 84 aufgenommen sein können. Die Leitkörper 88 können in geeigneter Weise an die Gestalt der Auflagekörper 44 angepasst sein. Fig. 6a zeigt ein rundes Außenprofil 45. In Fig. 6b ist das Außenprofil 45 viereckig gestaltet und mit abgerundeten Ecken versehen.

In Fig. 7a ist ein Einfädelbereich 106 gezeigt, in den die Übernahmespitze 102 des Eingriffsabschnitts 78 eingreifen kann, um das am Haken 84 aufgenommene Fördergut 20 seitlich vom Auflagekörper 44 zu übernehmen. Der Einfädelbereich 106 kann grundsätzlich durch die Gestaltung des Leitkörpers 88, des Hakens 84 und des Auflagekörpers 44 definiert sein. Mit anderen Worten kann der Einfädelbereich 106 als der Bereich aufgefasst werden, der durch den Leitkörper 88 "maskiert" wird, der zum Eingriffskörper 62 stromaufwärts versetzt ist. Somit kann der Leitkörper 88 den Einfädelbereich 106 für die Übernahmespitze 102 freihalten. Auf diese Weise kann die Übernahmespitze 102 den Haken 84 sicher untergreifen, ohne dass Kollisionen oder Fehlfunktionen zu befürchten sind. Ferner ist in Fig. 7a ein maximaler Umschließungswinkel β für den Eingriffsabschnitt 78 beim seitlichen Zuführen angedeutet. Der Umschließungswinkel β kann etwa 180° betragen. Es sind jedoch auch Gestaltungen möglich, bei denen der Umschließungswinkel β kleiner ist und etwa 60°, 90° oder 120° beträgt.

Fig. 7b zeigt einen gegenüber der Darstellung gemäß Fig. 7a stromabwärts versetzt angeordneten Querschnitt des Auflagekörpers 44. In den Einfädelbereich 106 (Fig. 7a) ist der Eingriffsabschnitt 78, etwa beginnend mit der Übernahmespitze 102, eingedrungen. Die Verlaufsfläche 104 (Fig. 4) des Eingriffsabschnitts 78 kann den Haken 84 untergreifen und den Haken 84 sicher an die ansteigende Flanke 72 der Führungskontur 76 der Eingriffskörpers 62 überführen. Der Eingriffsabschnitt 78 weist ein Innenprofil 79 auf, das auf das Außenprofil 45 (Fig. 6a) des Auflagekörpers 44 abgestimmt ist.

Wie bereits in Fig. 5 gezeigt, kann der Befestigungssteg 46 in der Z-Richtung außermittig am Auflagekörper 44 aufgenommen sein. Auf diese Weise kann ein seitliches Zuführen, etwa in der Zuführrichtung 63, des Eingriffskörpers 62 vereinfacht werden, der Umschließungswinkel β kann größer ausfallen. Die Gefahr von Kollisionen kann sich verringern. Der Eingriffsabschnitt 78 des Eingriffskörpers 62 kann den Auflagekörper 44 etwa hälftig in der Z-Richtung umschließen. Es versteht sich auch hier, dass die Zuführrichtung 63 nicht unbedingt absolut parallel zur Z-Achse (Fig. 3) verlaufen muss. Vielmehr kann unter einem seitlichen Zuführen auch ein Zubewegen des Eingriffskörpers 62 in Richtung auf den Auflagekörper 44 in einer Zuführrichtung 63 verstanden werden, die etwa in einem spitzen Winkel zur Z-Achse geneigt ist.

Die Figuren 8a und 8b zeigen schematisch stark vereinfachte Draufsichten der Abgabestation 30 in der Ausrückkonfiguration und der Eingriffskonfiguration. In der Ausrückkonfiguration (Fig. 8a) ist der Eingriffsabschnitt 78 vom Auflagekörper 44 beabstandet. Das Fördergut 20 kann die Abgabestation 30 passieren, ohne ausgeschleust zu werden. Gemäß der in Fig. 8a gezeigten Ausgestaltung kann der Eingriffskörper 62 etwa als Schwenkhebel ausgestaltet sein, der relativ zum Auflagekörper 44 verschwenkbar ist (Pfeil 68). In der Ausrückkonfiguration können der Eingriffsabschnitt 78 und der Förderpfad 12 einen, vorzugsweise spitzen, Winkel α einschließen, der vorzugsweise entgegen der Förderrichtung 16 geöffnet ist. Auf diese Weise können etwa Fördergüter 20, deren Befestigungselemente 22 in der Z-Richtung besonders raumeinnehmend gestaltet sind, den Eingriffsabschnitt 78 abdrängen, um den Eingriffskörper 62 passieren zu können.

Es versteht sich, dass alternativ zur in Fig. 8a schematisch gezeigten Gestaltung des verschwenkbaren Eingriffskörpers 62 auch ein translatorisches Verfahren des Eingriffskörpers 62 in Richtung auf den Auflagekörper 44 zum Wechseln zwischen der Eingriffskonfiguration und der Ausrückkonfiguration vorstellbar ist.

In Fig. 8b ist der Eingriffskörper 62 gemäß Fig. 8a in der Eingriffskonfiguration dargestellt. Der Eingriffskörper 62 ist seitlich in Richtung auf den Auflagekörper 44 verschwenkt und kann diesen etwa gemäß Fig. 7b zumindest teilweise umschließen. Auf diese Weise kann ein passierendes Fördergut 20 vom Eingriffsabschnitt 78 des Eingriffskörpers 62 übernommen werden und der Abgabestrecke 80 zugeführt werden. Beim Eingriffskörper 62 kann sich ein Abgabepfad 112 ergeben, der etwa zunächst im Wesentlichen parallel zum Förderpfad 12 verläuft und anschließend schräg vom Förderpfad 12 in Richtung auf die Abgabestrecke 80 wegführt, vgl. auch Fig. 9.

Fig. 9 zeigt eine Seitenansicht der Abgabestation gemäß Fig. 3 und Fig. 4 in der Eingriffskonfiguration. Der Endabschnitt 92 des Leitkörpers 88 kann vorzugsweise spitz auslaufend ausgebildet sein, kann jedoch eine abgerundete Spitze umfassen. Auf diese Weise können vom Leitkörper 88 nachströmende Haken 84 von Fördergütern 20 sicher aufgefädelt werden.

Insbesondere bei Kommissionieranwendungen, bspw. in der Bekleidungsindustrie, können die Fördergüter 20 etwa in Folie verpackt sein. Ferner erfolgt häufig eine Kopplung mehrerer Fördergüter 20 (etwa einer Kommissionslieferung) durch Fügen der zugehörigen Haken 84 der Befestigungselements 22. Das Fügen kann etwa mittels Fäden, Klebeband, Draht oder einer gemeinsamen Verpackungsfolie erfolgen. Somit können die Haken 84 grundsätzlich störende Fremdkörper aufweisen, die etwa eine Übernahme durch im Stand der Technik bekannte Eingriffskörper unverhältnismäßig erschweren können. Dabei kann es unter Umständen sogar zu einer Blockade der Förderanlage 10 kommen, die mit erheblichen Beschädigungen der Förderanlage 10, der Abgabestation 30 und/oder der aufgenommenen Fördergüter 20 einhergehen kann.

Der der Übernahmespitze 102 entgegen der Förderrichtung 16 vorgelagerte Leitkörper 88 kann mit dem Endabschnitt 92 eine robuste Spitze aufweisen, die unempfindlich gegenüber Fremdkörpern ist, die etwa mehrere gekoppelte Haken 84 umschließen können. Mit anderen Worten kann der Leitkörper 88 etwa als im Wesentlichen starre Führungskufe ausgebildet sein, deren Endabschnitt 92 entgegen der Förderrichtung 16 verjüngt bzw. zugespitzt ist. Nachrückende Fördergüter 20 können sicher an den Eingriffskörper 62 übergeben werden. Der Leitkörper 88 kann als Platzhalter fungieren. Wenn überhaupt Schäden oder Störungen auftreten sollten, können sich diese nicht auf den Eingriffskörper 62 auswirken.

Die Übernahmespitze 102 des Eingriffskörpers 78 wird in der in Fig. 9 gezeigten Ausgestaltung von einer Ausnehmung 108 im Leitkörper 88 zumindest teilweise überdeckt. Mit 110 ist ein Überdeckungsbereich in der X-Richtung bezeichnet. Auf diese Weise können etwa die Übernahmespitze 102 und die Ausnehmung 108 des Leitkörpers 88 derart, vorzugsweise bündig, in Eingriff gelangen, dass der Haken 84 unter Gewährleistung einer hohen Funktionssicherheit und Ausfallsicherheit an den Eingriffskörper 62 übergeben werden kann.

Daneben kann es bevorzugt sein, wenn die Übernahmespitze 102 ferner auch umfänglich nicht über eine Silhouette oder Umfangskontur hinausragt, die durch den Leitkörper 88 bestimmt ist, vgl. hierzu etwa auch Fig. 6a und Fig. 7b. Mit anderen Worten ist es bevorzugt, wenn sich der Leitkörper 88 und der Eingriffsabschnitt 78 aus Sicht eines nachrückenden Hakens 84 derart überdecken, dass ein im Wesentlichen nahtloser Übergang vom Leitkörper 88 an den Eingriffskörper 62 gewährleistet ist. Auf diese Weise können ausfallsichere und störungssichere Ausschleusvorgänge realisiert werden.

Der vorgeschaltete Leitkörper 88 kann etwa ferner ein unerwünschtes Pendeln der Haken 84 verhindern, das ein Untergreifen der Haken 84 durch die in den Einfädelbereich 106 eindringende Übernahmespitze 102 erschweren würde.

Der Haken 84, der bereits mit dem Eingriffskörper 62 zusammenwirkt, wird zunächst im Wesentlichen noch durch die Auflagekörper 44 bewegt. Insbesondere dann, wenn der Haken 84 entlang der ansteigenden Flanke 72 des Eingriffskörpers 62 gleitet, kann sich eine Entkopplung des Hakens 84 vom Auflagekörper 44 ergeben. Eine Mitnahme des Hakens 84 kann jedoch durch die Befestigungsstege 46 gewährleistet werden. Auf diese Weise kann der Haken 84 entlang des Abgabepfads 112 bis zum Übergangsbereich 100 zwischen der ansteigenden Flanke 72 und der abschüssigen Flanke 74 verfahren werden, ohne dass hierfür bei der Abgabestation 30 ein separater Antrieb erforderlich wäre. Im Bereich der abschüssigen Flanke 74 kann sich der Haken 84 selbsttätig entlang des Abgabepfads 112 in Richtung auf die Abgabestrecke 80 bewegen.

Es ist jedoch auch möglich, den Eingriffskörper 62 derart zu gestalten, dass der Haken 84 des zu übernehmenden Förderguts 20 trägheitsbedingt selbsttätig die ansteigende Flanke 72 überwinden kann. Die ist etwa dann der Fall, wenn das Fördergut 20 bei der Abgabe vom Auflagekörper 44 schnell genug ist (genügend kinetische Energie aufweist), um die ansteigende Flanke 72 herauf zu rutschen und den Übergangsbereich 100 (Fig. 4) zu überwinden. Ferner kann es sich empfehlen, eine Länge und eine Steigung der ansteigenden Flanke 72 an eine zu erwartende Fördergeschwindigkeit bzw. an ein zu erwartendes Gewicht der Fördergüter 20 anzupassen, um diese Eigenbewegung zu ermöglichen.

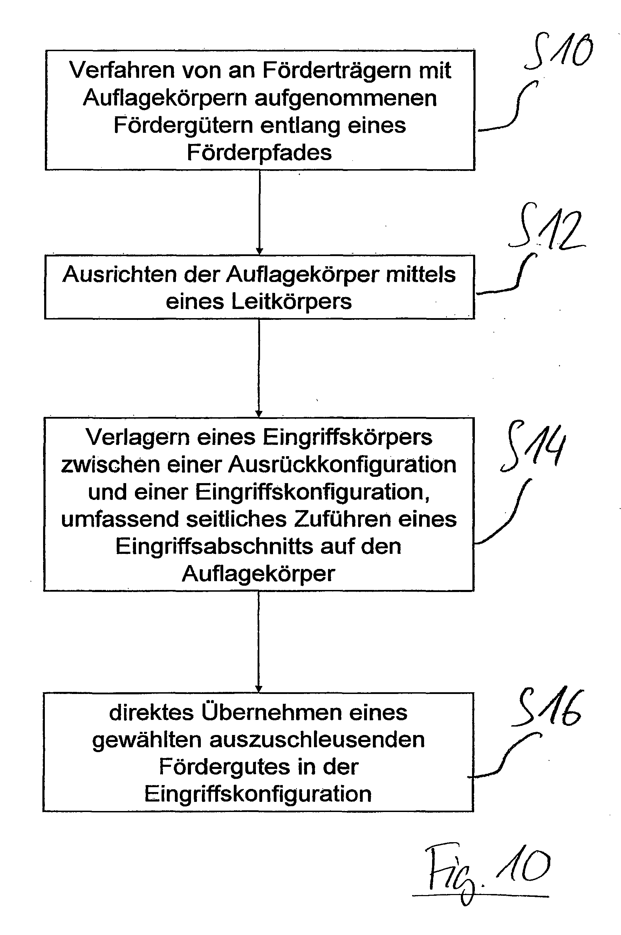

In Fig. 10 ist ein Flussdiagramm eines Verfahrens zum selektiven Ausschleusen von Fördergütern aus einem Förderpfad einer Förderanlage dargestellt.

In einem ersten Schritt S10 werden an Förderträgern 18 mit Auflagekörpern 44 aufgenommene Fördergüter 20 entlang eines Förderpfads 12 verfahren. Dies kann etwa in der Förderanlage 10 gemäß Fig. 1 erfolgen.

In einem nächsten Schritt S12 werden die Auflagekörper 44 und somit mittelbar Befestigungselemente 22, insbesondere Haken 84, der Fördergüter 20 mittels eines Leitkörpers 88 ausgerichtet. Das Ausrichten kann insbesondere durch einen, vorzugsweise spitz zulaufenden, Endabschnitt 92 des Leitkörpers 88 vereinfacht werden, der an einem stromaufwärtigen Ende des Leitkörpers 88 angeordnet ist. Der Leitkörper 88 kann etwa derart gestaltet sein, dass sich durch das Ausrichten bei den Haken 84 ein definierter Einfädelbereich 106 ergibt, in den etwa eine Übernahmespitze 102 eines Eingriffsabschnitts 78 eines Eingriffskörpers 62 eingreifen kann.

In einem nächsten Schritt S14 wird der Eingriffskörper 62 zwischen einer Ausrückkonfiguration und einer Eingriffskonfiguration verlagert. Dies kann etwa analog der Figuren 8a und 8b mittels eines Aktuators 54 erfolgen. Das Verlagern umfasst ein seitliches Zuführen des Eingriffsabschnitts 78 auf den Auflagekörper 44. Der Eingriffsabschnitt 78 kann an den Auflagekörper 44 angepasst sein.

In einem sich anschließenden Schritt S16 wird ein gewähltes auszuschleusendes Fördergut 20 in der Eingriffskonfiguration direkt übernommen. Dies kann insbesondere dadurch erfolgen, dass die Übernahmespitze 102 in den Einfädelbereich 106 eingeführt wird, der sich durch das Ausrichten der Haken 84 der Fördergüter 20 mittels des Leitkörpers 88 ergibt.

Vorzugsweise werden etwa der Leitkörper 88 und zumindest die Übernahmespitze 102 des Eingriffsabschnitts 78 des Eingriffskörpers 62 in der Eingriffskonfiguration zumindest partiell in Überdeckung gebracht, um eine nahtlose Übernahme des gewählten Fördergutes 20 zu gewährleisten.

In einem nachfolgenden fakultativen Schritt kann das gewählte Fördergut entlang eines Abgabepfads 112 geführt werden und an eine Abgabestrecke 80 übergeben werden. Dabei kann etwa eine Mitnahme des auszuschleusenden Förderguts 20 zumindest entlang einer ansteigenden Flanke 72 des Eingriffskörpers 62 durch einen Befestigungssteg 46 erfolgen, der den Auflagekörper 44 für das Fördergut 20 mit dem Förderträger 18 der Förderanlage 10 verbindet, vgl. auch Fig. 9.

## Patentansprüche

1. Abgabestation (30) für eine Förderanlage (10), insbesondere eine Hängeförderanlage mit Förderträgern (18), die entlang eines Förderpfades (12) in einer Förderrichtung (16) verfahrbar sind, zur Aufnahme von Fördergütern (20), insbesondere von Befestigungselementen (22), vorzugsweise Haken (84), der Fördergüter (20), wobei die Abgabestation (30) einen Aktuator (54) aufweist, der mit einem Eingriffskörper (62) mit einem Eingriffsabschnitt (78) zusammenwirkt, wobei der Eingriffsabschnitt (78) an einen Auflagekörper (44) des Förderträgers (18) angepasst ist, wobei der Eingriffskörper (62) selektiv zwischen einer Eingriffskonfiguration und einer Ausrückkonfiguration verlagerbar ist, wobei der Eingriffsabschnitt (78) in der Ausrückkonfiguration vom Auflagekörper (44) beabstandet ist, wobei der Eingriffsabschnitt (78) in der Eingriffskonfiguration an den entlang des Förderpfades (12) verfahrbaren Auflagekörper (44) angenähert ist, um ein passierendes Fördergut (20), das am Auflagekörper (44) aufgenommen ist, selektiv aus dem Förderpfad (12) auszuschleusen, und wobei der Eingriffskörper (62) eine Führungskontur (76) aufweist, um das auszuschleusende Fördergut (20) einer Abgabestrecke (80) zuzuführen, **dadurch gekennzeichnet, dass** sich der Eingriffsabschnitt (78) vorzugsweise seitlich zumindest partiell an den Auflagekörper (44) anschmiegt, und dass der Eingriffsabschnitt (78) im Wesentlichen seitlich, vorzugsweise ungefähr in einer Querrichtung (Z) zur Förderrichtung (16), auf den Auflagekörper (44) zuführbar ist.

2. Abgabestation nach Anspruch 1, **dadurch gekennzeichnet, dass** der Eingriffsabschnitt (78) ein Innenprofil (79) aufweist, das mit einem Außenprofil (45) des Auflagekörpers (44) korrespondiert und das vorzugsweise als Versatzfläche gegenüber dem Außenprofil (45) ausgebildet ist.

3. Abgabestation (30) nach Anspruch 1 oder 2, **dadurch gekennzeichnet, dass** der Aktuator (54) dazu ausgebildet ist, den Eingriffskörper (62) um eine Schwenkachse (66) zu verschwenken, die im Wesentlichen ungefähr senkrecht zu einer Längsrichtung (X) und im Wesentlichen ungefähr senkrecht zu einer Querrichtung (Z) orientiert ist, wobei die Längsrichtung (X) vorzugsweise mit der Förderrichtung (16) korrespondiert.

4. Abgabestation (30) nach einem der vorhergehenden Ansprüche, **dadurch gekennzeichnet, dass** der Eingriffsabschnitt (78) in der Eingriffskonfiguration im Wesentlichen ungefähr parallel zum Förderpfad (12) orientiert ist, und wobei der Eingriffsabschnitt (78) in der Ausrückkonfiguration einen, vorzugsweise spitzen, Winkel (α) mit dem Förderpfad (12) einschließt, der insbesondere entgegen der Förderrichtung (16) geöffnet ist.

5. Abgabestation (30) nach einem der vorhergehenden Ansprüche, **dadurch gekennzeichnet, dass** die Abgabestrecke (80) und die Führungskontur (76) des Eingriffskörpers (78) zumindest in der Eingriffskonfiguration einen durchgängigen Abgabepfad (112) für das Fördergut (20) definieren, und wobei der Eingriffskörper (62) vorzugsweise dazu ausgebildet ist, das Fördergut (20) direkt vom Auflagekörper (44) zu übernehmen.

6. Abgabestation (30) nach einem der vorhergehenden Ansprüche, **dadurch gekennzeichnet, dass** der Eingriffsabschnitt (78) einer Übernahmespitze (102) aufweist, die sich vorzugsweise an eine Verlaufsfläche (104) des Eingriffsabschnitts (78) anschließt, und die in einen Einfädelbereich (106) zwischen dem Befestigungselement (22) eines auszuschleusenden Fördergutes (20) und dem Auflagekörper (44) eingreifen kann, um das Befestigungselement (22) zu übernehmen.

7. Abgabestation (30) nach Anspruch 6, ferner **gekennzeichnet durch** einen Leitkörper (88), der vorzugsweise parallel zum Förderpfad (12) orientiert ist, wobei der Leitkörper (88) den Auflagekörper (44) in einer Vorzugslage ausrichtet, vorzugsweise richtet der Leitkörper (88) den Auflagekörper (44) des auszuschleusenden Fördergutes (20) derart aus, dass die Übernahmespitze (102) in der Eingriffskonfiguration zur Ausschleusung des Fördergutes (20) sicher in den Einfädelbereich (106) zwischen dem Befestigungselement (22) und dem Auflagekörper (44) einführbar ist.

8. Abgabestation (30) nach Anspruch 7, **dadurch gekennzeichnet, dass** der Leitkörper (88) stromaufwärts gegenüber dem Eingriffskörper (62) versetzt und vorzugsweise gestellfest angeordnet ist und, wobei insbesondere das Befestigungselement (22) des passierenden Fördergutes (20) am Leitkörper (88) entlang gleiten kann, und wobei der Leitkörper (88) vorzugsweise den Auflagekörper (44) zumindest partiell umschließt.

9. Abgabestation (30) nach Anspruch 7 oder 8, **dadurch gekennzeichnet, dass** der Leitkörper (88) einen stromaufwärtigen Endabschnitt (92) aufweist, der einen, vorzugsweise spitzen, Auslauf umfasst, der der Förderrichtung (16) entgegengerichtet ist.

10. Abgabestation (30) nach einem der Ansprüche 7 bis 9, **dadurch gekennzeichnet, dass** sich der Leitkörper (88) und die Übernahmespitze (102) in der Eingriffskonfiguration einander zumindest teilweise überdecken, wobei vorzugsweise die Übernahmespitze (102) des Eingriffskörpers (62) in der Eingriffskonfiguration in eine, vorzugsweise seitliche, Ausnehmung (108) im Leitkörper (88) eingreift.

11. Förderanlage (10), insbesondere Hängeförderanlage, mit einer Förderkette mit einer Mehrzahl von Förderträgern (18) mit Tragsegmenten (36) mit Auflagekörpern (44) zur Aufnahme von Fördergütern (20), insbesondere Hängewaren, **gekennzeichnet durch** eine Abgabestation (30) nach einem der vorhergehenden Ansprüche.

12. Förderanlage (10) nach Anspruch 11, **dadurch gekennzeichnet, dass** die Tragsegmente (36) zumindest einen, vorzugsweise ungefähr vertikal verlaufenden, Befestigungssteg (46) zur Aufnahme des Auflagekörpers (44) an den Förderträgen (18) aufweisen.

13. Förderanlage (10) nach Anspruch 11 oder 12, **dadurch gekennzeichnet, dass** sich die Auflagekörper (44) im Wesentlichen in der Längsrichtung (X), vorzugsweise stabförmig, erstrecken, wobei die Auflagekörper (44) ein Außenprofil (45) aufweisen, und wobei der Eingriffsabschnitt (78) des Eingriffskörpers (62) ein Innenprofil (79) aufweist, das zumindest abschnittsweise mit dem Außenprofil (45) korrespondiert.

14. Förderanlage (10) nach Anspruch 12 oder 13, **dadurch gekennzeichnet, dass** die Befestigungsstege (46) außermittig an den Auflagekörpern (44) der Tragsegmente (36) angeordnet sind.

15. Verfahren zum selektiven Ausschleusen von, vorzugsweise hängend transportierten, Fördergütern (20) aus einem Förderpfad (12) einer Förderanlage (10), insbesondere einer Hängeförderanlage, mit den folgenden Schritten:
- Verfahren von mittels Befestigungselementen (22) an Auflagekörpern (44) aufgenommenen Fördergütern (20) entlang des Förderpfades (12);
- vorzugsweise Ausrichten der Auflagekörper (44) mittels eines Leitkörpers (88) in einer Vorzugslage, um einen Einfädelbereich (106) zu definieren;
- selektives Verlagern eines Eingriffskörpers (62) mit einem Eingriffsabschnitt (78) zwischen einer Ausrückkonfiguration und einer Eingriffskonfiguration mittels eines Aktuators (54), umfassend ein im Wesentlichen seitliches Zuführen des Eingriffsabschnitts (78) auf den Auflagekörper (44), wobei der Eingriffsabschnitt (78) in der Eingriffskonfiguration an den Auflagekörper (44) angenähert ist und sich vorzugsweise seitlich zumindest partiell an den Auflagekörper (44) anschmiegt; und
- direktes Übernehmen eines gewählten auszuschleusenden Fördergutes (20) vom Auflagekörper (44) mittels einer Führungskontur (76) des Eingriffskörpers (62), und Überführen des aufgenommenen Fördergutes (20) an eine Abgabestrecke (80), dabei vorzugsweise zumindest temporäre Mitnahme des gewählten Fördergutes (20) durch Befestigungsstege (46) der Auflagekörper (44).

## Claims

1. Discharge station (30) for a conveyor (10), particularly an overhead conveyor comprising conveying carriers (18) which are movable along a conveying path (12) in a conveying direction (16), for receiving to-be-conveyed goods (20), particularly mounting elements (22), preferably hooks (84), of the to-be-conveyed goods (20), wherein the discharge station (30) comprises an actuator (54) that cooperates with an engagement body (62) including an engagement portion (78), wherein the engagement portion (78) is adapted to a support body (44) of the conveying carrier (18), wherein the engagement body (62) is selectively movable between an engagement configuration and an out-of-engagement configuration, wherein the engagement portion (78) is, in the out-of-engagement configuration, spaced from the support body (44), wherein the engagement portion (78), in the engagement configuration, approaches the support body (44) which is movable along the conveying path (12), to selectively unload a passing to-be-conveyed good (20) which is received at the support body (44) from the conveying path (12), and wherein the engagement body (62) comprises a guide contour (76), to feed the to-be-unloaded to-be-conveyed good (20) to a discharge line (80), **characterized in that** the engagement portion (78), preferably laterally, at least partially huddles against the support body (44), and that the engagement portion (78) can be fed basically laterally, preferably approximately in a transverse direction (Z) with respect to the conveying direction (16), to the support body (44).

2. Discharge station according to claim 1, **characterized in that** the engagement portion (78) comprises an inner profile (79) which corresponds to an outer profile (45) of the support body (44), and which is preferably arranged as offset surface with respect to the outer profile (45).

3. Discharge station (30) according to claim 1 or 2, **characterized in that** the actuator (54) is arranged to swivel the engagement body (62) about a swivel axis (66), which is basically approximately perpendicular to a longitudinal direction (X) and basically approximately perpendicular to a transverse direction (Z), wherein the longitudinal direction (X) preferably corresponds to the conveying direction (16).

4. Discharge station (30) according to any of the preceding claims, **characterized in that** the engagement portion (78), in the engagement configuration, is oriented basically approximately parallel to the conveying path (12), and wherein the engagement portion (78), in the out-of-engagement configuration, and the conveying path (12) are arranged at an angle (α), preferably an acute angle (α), which is particularly opened against the conveying direction (16).

5. Discharge station (30) according to any of the preceding claims, **characterized in that** the discharge line (80) and the guide contour (76) of the engagement body (78) define, at least in the engagement configuration, a continuous discharge path (112) for the to-be-conveyed good (20), and wherein the engagement body (62) is preferably configured to directly take over the to-be-conveyed good (20) from the support body (44).

6. Discharge station (30) according to any of the preceding claims, **characterized in that** the engagement portion (78) comprises a takeover tip (102) which preferably follows a transition surface (104) of the engagement portion (78), and which can engage a thread-in region (106) between the mounting element (22) of a to-be-unloaded to-be-conveyed good (20) and the support body (44), to take over the mounting element (22).

7. Discharge station (30) according to claim 6, further **characterized by** a guide body (88) which is preferably oriented parallel to the conveying path (12), wherein the guide body (88) aligns the support body (44) in a preference orientation, wherein the guide body (88) preferably aligns the support body (44) of the to-be-unloaded to-be-conveyed good (20) in such a way that the takeover tip (102) is, in the engagement configuration, safely insertable in the thread-in region (106) between the mounting element (22) and the support body (44) to unload the to-be-conveyed good (20).

8. Discharge station (30) according to claim 7, **characterized in that** the guide body (88) is displaced upstream with respect to the engagement body (62) and preferably arranged in a fashion fixedly mounted to a frame, and wherein particularly the mounting element (22) of the passing to-be-conveyed good (20) may slide along the guide body (88), and wherein the guide body (88) preferably at least partially embraces the support body (44).

9. Discharge station (30) according to claim 7 or 8, **characterized in that** the guide body (88) comprises an upstream end portion (92) which involves a run-out, preferably an acute run-out, which is arranged opposite to the conveying direction (16).

10. Discharge station (30) according to any of claims 7 to 9, **characterized in that** the guide body (88) and the takeover tip (102), in the engagement configuration, at least partially overlap each other, wherein the takeover tip (102) of the engagement body (62), in the engagement configuration, preferably engages a, preferably lateral, recess (108) of the guide body (88).

11. Conveyor (10), particularly overhead conveyor, comprising a conveying chain including a plurality of conveying carriers (18) including carrier segments (36) including support bodies (44) for receiving to-be-conveyed goods (20), preferably hanging goods, **characterized by** a discharge station (30) according to any of the preceding claims.

12. Conveyor (10) according to claim 11, **characterized in that** the carrier segments (36) comprise at least one mounting tab (46) for receiving the support body (44) at the conveying carriers (18), preferably an approximately vertically extending mounting tab (46).

13. Conveyor (10) according to claim 11 or 12, **characterized in that** the support bodies (44) basically extend in the longitudinal direction (X), preferably in a rod-like fashion, wherein the support bodies (44) comprise an exterior profile (45), and wherein the engagement portion (78) of the engagement body (62) comprises an interior profile (79) which at least sectionally corresponds to the exterior profile (45).

14. Conveyor (10) according to claim 12 or 13, **characterized in that** the mounting tabs (46) are arranged at the support bodies (44) of the carrier segments (36) in an off-center fashion.

15. Method for selectively unloading to-be-conveyed goods, preferably hanging transported to-be-conveyed goods (20) from a conveying path (12) of a conveyor (10), particularly an overhead conveyor, comprising the following steps:
- moving to-be-conveyed goods (20) along the conveying path (12) which are, by means of mounting elements (22), received at support bodies (44);
- preferably aligning the support bodies (44) by means of a guide body (48) in a preference orientation, to define a thread-in region (106);
- selectively moving the engagement body (62) including an engagement portion (78) between an out-of-engagement configuration and an engagement configuration by means of an actuator (54), comprising basically laterally feeding the engagement portion (78) to the support body (44), wherein the engagement portion (78), in the engagement configuration, approaches the support body (44) and preferably laterally at least partially huddles against the support body (44); and
- directly taking over a selected to-be-unloaded to-be-conveyed good (20) from the support body (44) by means of a guide contour (76) of the engagement body (62), and transferring the received to-be-conveyed good (20) to a discharge line (80), thereby preferably at least temporarily entraining the selected to-be-conveyed good (20) by mounting tabs (46) of the support body (44).

## Revendications

1. Poste de distribution (30) pour une installation de transport (10), en particulier une installation de transport suspendue pourvue de supports de transport (18) qui peuvent être déplacés dans une direction de transport (16) le long d'une voie de transport (12), pour recevoir des articles à transporter (20), en particulier des éléments de fixation (22), de préférence des crochets (84), des articles à transporter (20), le poste de distribution (30) comprenant un actionneur (54) qui coopère avec un corps d'engagement (62) doté d'une portion d'engagement (78), la portion d'engagement (78) étant adaptée à un corps d'appui (44) du support de transport (18), le corps d'engagement (62) pouvant être déplacé de manière sélective entre une configuration d'engagement et une configuration de désaccouplement, la portion d'engagement (78) étant espacée du corps d'appui (44) dans la configuration de désaccouplement, la portion d'engagement (78) étant rapprochée du corps d'appui (44) pouvant être déplacé le long de la voie de transport (12) dans la configuration d'engagement, afin d'évacuer un article à transporter passant (20), qui est reçu sur le corps d'appui (44), de manière sélective hors de la voie de transport (12), et le corps d'engagement (62) comprenant un contour de guidage (76), afin d'acheminer l'article à transporter à évacuer (20) jusqu'à un tronçon de distribution (80), **caractérisé en ce que** la portion d'engagement (78) épouse de préférence latéralement au moins partiellement le corps d'appui (44), et **en ce que** la portion d'engagement (78) peut être acheminée sur le corps d'appui (44) essentiellement latéralement, de préférence approximativement dans une direction transversale (Z) par rapport à la direction de transport (16).

2. Poste de distribution selon la revendication 1, **caractérisé en ce que** la portion d'engagement (78) présente un profil intérieur (79) qui correspond à un profil extérieur (45) du corps d'appui (44) et qui est réalisé de préférence sous forme de surface décalée par rapport au profil extérieur (45).

3. Poste de distribution (30) selon la revendication 1 ou 2, **caractérisé en ce que** l'actionneur (54) est réalisé pour pivoter le corps d'engagement (62) autour d'un axe de pivotement (66) qui est orienté essentiellement approximativement perpendiculairement à une direction longitudinale (X) et essentiellement approximativement perpendiculairement à une direction transversale (Z), la direction longitudinale (X) correspondant de préférence à la direction de transport (16).

4. Poste de distribution (30) selon l'une quelconque des revendications précédentes, **caractérisé en ce que** la portion d'engagement (78) est, dans la configuration d'engagement, orientée essentiellement approximativement parallèlement à la voie de transport (12), et la portion d'engagement (78) formant, dans la configuration de désaccouplement, un angle (α) de préférence aigu, avec la voie de transport (12), lequel angle est ouvert en particulier en sens inverse à la direction de transport (16).

5. Poste de distribution (30) selon l'une quelconque des revendications précédentes, **caractérisé en ce que** le tronçon de distribution (80) et le contour de guidage (76) du corps d'engagement (78) définissent, au moins dans la configuration d'engagement, une voie de distribution continue (112) pour l'article à transporter (20), et le corps d'engagement (62) étant réalisé de préférence pour prendre l'article à transporter (20) directement à partir du corps d'appui (44).

6. Poste de distribution (30) selon l'une quelconque des revendications précédentes, **caractérisé en ce que** la portion d'engagement (78) comprend une pointe de prise (102) qui se raccorde de préférence à une surface d'avancement (104) de la portion d'engagement (78), et qui peut s'engager dans une région d'enfilage (106) entre l'élément de fixation (22) d'un article à transporter à évacuer (20) et le corps d'appui (44), afin de prendre l'élément de fixation (22).

7. Poste de distribution (30) selon la revendication 6, **caractérisé en outre par** un corps de guidage (88) qui est orienté de préférence parallèlement à la voie de transport (12), le corps de guidage (88) orientant le corps d'appui (44) dans une position préférée, le corps de guidage (88) orientant de préférence le corps d'appui (44) de l'article à transporter à évacuer (20) de telle sorte que la pointe de prise (102) puisse, dans la configuration d'engagement, être insérée de manière sûre dans la région d'enfilage (106) entre l'élément de fixation (22) et le corps d'appui (44) pour l'évacuation de l'article à transporter (20).

8. Poste de distribution (30) selon la revendication 7, **caractérisé en ce que** le corps de guidage (88) est disposé de manière décalée en amont par rapport au corps d'engagement (62) et de préférence de manière solidaire du bâti, l'élément de fixation (22) de l'article à transporter passant (20) pouvant glisser en particulier le long du corps de guidage (88), et le corps de guidage (88) entourant au moins partiellement de préférence le corps d'appui (44).

9. Poste de distribution (30) selon la revendication 7 ou 8, **caractérisé en ce que** le corps de guidage (88) comprend une portion d'extrémité amont (92) qui comporte une sortie de préférence pointue qui est opposée à la direction de transport (16).

10. Poste de distribution (30) selon l'une quelconque des revendications 7 à 9, **caractérisé en ce que** le corps de guidage (88) et la pointe de prise (102) se recouvrent au moins partiellement l'un l'autre dans la configuration d'engagement, la pointe de prise (102) du corps d'engagement (62) s'engageant de préférence, dans la configuration d'engagement, dans un évidement (108) de préférence latéral dans le corps de guidage (88).

11. Installation de transport (10), en particulier installation de transport suspendue, comprenant une chaîne de transporteur pourvue d'une pluralité de supports de transport (18) comprenant des segments de support (36) avec des corps d'appui (44) pour la réception d'articles à transporter (20), en particulier de marchandises suspendues, **caractérisée par** un poste de distribution (30) selon l'une quelconque des revendications précédentes.

12. Installation de transport (10) selon la revendication 11, **caractérisée en ce que** les segments de support (36) comprennent au moins une nervure de fixation (46) s'étendant de préférence approximativement verticalement pour la réception du corps d'appui (44) sur les supports de transport (18).

13. Installation de transport (10) selon la revendication 11 ou 12, **caractérisée en ce que** les corps d'appui (44) s'étendent de préférence en forme de barres essentiellement dans la direction longitudinale (X), les corps d'appui (44) présentant un profil extérieur (45), et la portion d'engagement (78) du corps d'engagement (62) présentant un profil intérieur (79) qui correspond au moins par portions au profil extérieur (45).

14. Installation de transport (10) selon la revendication 12 ou 13, **caractérisée en ce que** les nervures de fixation (46) sont disposées de manière excentrique sur les corps d'appui (44) des segments de support (36).

15. Procédé d'évacuation sélective d'articles à transporter (20), transportés de préférence de manière suspendue, hors d'une voie de transport (12) d'une installation de transport (10), en particulier d'une installation de transport suspendue, comprenant les étapes suivantes :
- déplacement d'articles à transporter (20) reçus sur des corps d'appui (44) au moyen d'éléments de fixation (22) le long de la voie de transport (12) ;
- de préférence orientation des corps d'appui (44) au moyen d'un corps de guidage (88) dans une position préférée, afin de définir une région d'enfilage (106) ;
- déplacement sélectif d'un corps d'engagement (62) présentant une portion d'engagement (78) entre une configuration de désaccouplement et une configuration d'engagement au moyen d'un actionneur (54), comportant un acheminement essentiellement latéral de la portion d'engagement (78) sur le corps d'appui (44), la portion d'engagement (78) étant rapprochée du corps d'appui (44) dans la configuration d'engagement et épousant de préférence latéralement au moins partiellement le corps d'appui (44) ; et
- prise directe d'un article à transporter à évacuer (20) sélectionné à partir du corps d'appui (44) au moyen d'un contour de guidage (76) du corps d'engagement (62), et transfert de l'article à transporter reçu (20) à un tronçon de distribution (80), en l'occurrence entraînement de préférence au moins temporaire de l'article à transporter (20) sélectionné au moyen de nervures de fixation (46) des corps d'appui (44).
